(19) Europäisches Patentamt
European Patent Office
Office européen des brevets

(11) **EP 3 445 684 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **17708709.5**

(22) Anmeldetag: **21.02.2017**

(51) Internationale Patentklassifikation (IPC):
**B65G 47/08** (2006.01)   **B65B 21/18** (2006.01)
**B65G 47/90** (2006.01)

(52) Gemeinsame Patentklassifikation (CPC):
**B65G 47/088; B65G 47/90;** B65G 57/22;
B65G 2201/0235; B65G 2201/0244

(86) Internationale Anmeldenummer:
**PCT/EP2017/053841**

(87) Internationale Veröffentlichungsnummer:
**WO 2017/182163 (26.10.2017 Gazette 2017/43)**

(54) **VORRICHTUNG UND VERFAHREN ZUM UMGANG MIT IN MINDESTENS EINER REIHE HINTEREINANDER BEWEGTEN STÜCKGÜTERN**

APPARATUS AND METHOD FOR HANDLING ARTICLES MOVING ONE BEHIND THE OTHER IN AT LEAST ONE ROW

DISPOSITIF ET PROCÉDÉ DE MANUTENTION DE MARCHANDISES DE DÉTAIL DÉPLACÉES LES UNES DERRIÈRE LES AUTRES SUR AU MOINS UNE RANGÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2016 DE 102016206652**

(43) Veröffentlichungstag der Anmeldung:
**27.02.2019 Patentblatt 2019/09**

(73) Patentinhaber: **Krones Aktiengesellschaft**
**93073 Neutraubling (DE)**

(72) Erfinder:
• **ASTNER, Michael**
**93073 Neutraubling (DE)**
• **BEER, Erhard**
**93073 Neutraubling (DE)**

• **KOLLMUSS, Manuel**
**93073 Neutraubling (DE)**
• **MEHDI, Arsalan**
**93073 Neutraubling (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
**EP-A1- 0 708 028     EP-A1- 2 792 626**
**WO-A2-2014/145412     DE-A1- 4 439 728**
**DE-B- 1 228 557     DE-U1- 20 108 401**
**FR-A1- 2 993 870**

EP 3 445 684 B1

**Beschreibung**

Die vorliegende Erfindung betrifft eine Vorrichtung zum Umgang mit in mindestens einer Reihe hintereinander bewegten Stückgütern mit den Merkmalen des unabhängigen Vorrichtungsanspruchs 1. Zudem betrifft die Erfindung ein Verfahren zum Umgang mit in mindestens einer Reihe hintereinander bewegten Stückgütern mit den Merkmalen des unabhängigen Verfahrensanspruchs 8.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit Steuer- und regelbaren Antrieben besitzt. Mit den Steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein sollen, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Die Offenlegungsschrift DE 44 39 728 A1 beschreibt eine Vorrichtung zum Befördern und Gruppieren von über einen Zuführweg in einer Zuführrichtung mittels Fördereinheiten zugeführten Gegenständen mit zwei Reihen gegenüberliegender, korrespondierender und in einer Seite-an-Seite-Beziehung angeordneter Förderelemente, die während eines parallel zur Zuführrichtung verlaufenden Arbeitswegs die Gegenstände durch eine Zustellbewegung quer zur Zuführrichtung von beiden Seiten des Zuführwegs erfassen, befördern und gruppieren und durch eine Wegstellbewegung quer zur Zuführrichtung freigeben und einen parallel zum Arbeitsweg entgegen der Zuführrichtung verlaufenden Rückweg durchlaufen. Gruppen von zuvorderst angeordneten Artikeln werden zwischen Verschiebeeinheiten geklemmt und vermittels einer schnelleren Bewegung der Verschiebeeinheiten in Transportrichtung in eine gruppierte und beabstandete Anordnung verbracht.

Die Offenlegungsschrift EP 2 792 626 A1 offenbart ein Gruppierverfahren und eine Gruppiervorrichtung, wobei jeweils eine Artikelgruppe zwischen Klemmleisten erfasst und seitlich verschoben wird.

Das Dokument EP 0 708 028 A1 beschreibt einen Fördermechanismus für Artikel, der dazu dient, von einer lückenlos einlaufenden Formation an Artikeln jeweils Gruppen von Artikeln zu bilden, die voneinander beabstandet sind. Hierfür sind Schlitten mit einer Mehrzahl von Taschen für die Artikel vorgesehen.

Das Dokument FR 2 993 870 A1 offenbart ebenfalls eine Vorrichtung zum seitlichen Verschieben von Artikelgruppen, wobei die Artikelgruppen zwischen zwei Klemmleisten o.ä. erfasst werden.

Die Offenlegungsschrift WO 2014/145412 A2 beschreibt eine Vorrichtung zum Anordnen von kontinuierlich bewegten Artikeln. Hierbei werden Artikel, die sich stromabwärts befinden verlangsamt, um größere Gruppierungen auszubilden. Die Artikel oder Artikelgruppen werden der Vorrichtung beabstandet zueinander zugeführt. DE20108401 U1 offenbart eine Vorrichtung nach dem Oberbegriff des Anspruchs 1 sowie ein Verfahren nach dem Oberbegriff des Anspruchs 8.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Das Verfahren soll die Verarbeitung von Stückgütern ermöglichen, die in mindestens einer Reihe befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einer Vorrichtung und mit einem Verfahren zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die nachfolgend in unterschiedlichen Ausführungsvarianten beschriebene erfindungsgemäße Vorrichtung dient dem Umgang und/oder der Handhabung von Stückgütern, die insbesondere in mindestens einer Reihe hintereinander bewegt werden können, die jedenfalls hintereinander bewegt werden.

Unabhängig von der Abfolge der hintereinander transportierten Stückgüter werden diese normalerweise fluchtend hintereinander transportiert. Die hintereinander transportierten Stückgüter können wahlweise taktweise transportiert werden, bspw. in aufeinander folgenden Reihen von jeweils mehreren Stückgütern etc. Die Vorrichtung zum Umgang mit und/oder der Handhabung von in mindestens einer Reihe hintereinander bewegten Stückgütern umfasst mindestens einen Manipulator für die Stückgüter, der diese insbesondere aufnehmen, erfassen, greifen, manipulieren, d.h. drehen, positionieren und an gewünschter Position und/oder in gewünschter unveränderter oder neuer Ausrichtung wieder absetzen und sich von den Stückgütern lösen kann. Dieser Manipulator kann insbesondere als sog. Deltakinematik-Roboter ausgebildet oder Teil eines solchen Deltakinematik-Roboters sein, da diese hochdynamisch und mit hoher Stellpräzision arbeitenden Robotertypen besonders geeignet zur schnellen Aufnahme, Erfassung, Manipulation, Drehung und Neupositionierung von zahlreichen Stückgütern innerhalb kurzer Zeit geeignet sind. Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bzw. vom Deltakinematik-Roboter bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Weiterhin umfasst die erfindungsgemäße Vorrichtung wenigstens eine Transporteinrichtung, über welche unmittelbar aufeinanderfolgende Stückgüter der Reihe ohne Beabstandung als geschlossene Formation, wahlweise jedoch auch taktweise und/oder mit definierten Lücken zwischen aufeinander folgenden Reihen oder Gruppen von Stückgütern in einen Erfassungsbereich des mindestens einen Manipulators transportierbar sind. Der mindestens eine Manipulator ist in erster Linie zum klemmenden und/oder kraft- und/oder formschlüssigen Erfassen sowie zum Abtrennen mindestens eines Stückgutes aus der mittels der wenigstens einen Transporteinrichtung in seinen Erfassungsbereich transportieren geschlossenen Formation und zum Überführen des mindestens einen Stückgutes in eine Zielposition und/oder Zielausrichtung ausgebildet bzw. ausgestattet. Weiterhin sind dem mindestens einen Manipulator wenigstens zwei gegenüberliegend, insbesondere paarweise gegenüberliegend angeordnete Klemm- und/oder Greifelemente zugeordnet, welche zum klemmenden und/oder kraft- und/oder formschlüssigen Erfassen sowie zum Abtrennen und Überführen des jeweiligen mindestens einen Stückgutes bzw. der mehreren erfassten Stückgüter in die Zielposition und/oder Zielausrichtung miteinander, insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Es ist damit nicht ausgeschlossen, dass ggf. mehrere Klemm- und/oder Greifelemente in der definierten Weise ausgestaltet sind; zudem ist nicht ausgeschlossen, dass mehr als zwei Elemente vorhanden sind.

Bei der erfindungsgemäßen Vorrichtung ist zudem vorgesehen, dass mindestens eines von zwei gegenüberliegend angeordneten Klemm- und/oder Greifelementen des mindestens einen Manipulators zum kraft- und/oder formschlüssigen Erfassen des mindestens einen Stückgutes ausgebildet ist. Da zudem in der vorliegenden Beschreibung neben der formschlüssigen Erfassung der Stückgüter auch oftmals von einer klemmenden Erfassung der Stückgüter die Rede ist, sei an dieser Stelle erwähnt, dass damit auch eine kraftschlüssige Erfassung mitumfasst sein soll, da bei den einzelnen Greifvorgängen in aller Regel nicht exakt bestimmbar und insbesondere nicht exakt voneinander abgrenzbar ist, wie die eigentliche Kraftübertragung von den Greifelementen auf die Stückgüter, die Gebinde etc. erfolgt. Eine formschlüssige Erfassung bei gleichzeitiger leichter Klemmung enthält in aller Regel auch einen zumindest leichten Kraftschluss.

Bei der Vorrichtung kann weiterhin vorgesehen sein, dass mindestens eines von zwei gegenüberliegend angeordneten Klemm- und/oder Greifelementen des mindestens einen Manipulators zumindest bereichsweise mit einer Außenkontur zumindest an einer Kontaktfläche und/oder an den Kontaktbereichen des wenigstens einen kraft- und/oder formschlüssig zu erfassenden Stückgutes korrespondiert. Mit diesen korrespondierenden Konturen kann insbesondere gemeint sein, dass die Konturen zumindest abschnittsweise aneinander angepasst sind und einen Formschluss zwischen den Kontaktflächen und/oder Kontaktbereichen des jeweils erfassten Stückgutes und den zu den Stückgütern weisenden Flächen der Klemm- und/oder Greifelemente zumindest abschnittsweise begünstigen, indem die jeweiligen Flächen aneinander angepasst sind bzw. flächig oder linienförmig aneinander liegen.

Weiterhin kann die Vorrichtung dergestalt ausgebildet sein, dass mindestens eines von zwei gegenüberliegend angeordneten Klemm- und/oder Greifelementen zum kraft- und/oder formschlüssigen Erfassen des mindestens einen Stückgutes wenigstens eine Kontaktfläche, wenigstens ein Kontaktflächenpaar und/oder wenigstens einen Kontaktbereich für das mindestens eine kraft- und/oder formschlüssig zu erfassende Stückgut ausbildet. Diese Kontaktfläche, dieses Kontaktflächenpaar und/oder dieser wenigstens eine Kontaktbereich ist bei der Erfassung des mindestens einen Stückgutes mit dessen zylindrischer, kegelförmiger und/oder konkav oder mehreckig gewölbter bzw. ggf. auch anderweitig konturierter Außenmantelfläche flächig und/oder streifenförmig und/oder linienförmig und/oder punktuell in Anlage bringbar. Es sei an dieser Stelle betont, dass die mit den Stückgütern in Kontakt gebrachten bzw. zu diesen weisenden Flächen der Klemm- und/oder Greifelemente keineswegs konvexe Konturen aufweisen müssen, sondern es gilt, dass vielmehr alle denkbaren und/oder sinnvollen Konturvarianten für diese Kontaktflächen oder Kontaktflächenpaare oder Kontaktbereiche möglich sind und hiermit als offenbart gelten sollen. Die Konturen können durchaus in Teilen konvex oder in Abschnitten konvex etc. sein. Ebenso denkbar sind zahllose andere Varianten, z.B. stufenförmige, treppenförmige, dreieckige usw. Konturen, die wichtig sein können für mehreckige oder unregelmäßige Außenkonturen z.B. von Behältern. Hierbei können auch kleinere Kanten in treppenförmiger Anordnung oder in paarweiser Anordnung sinnvoll sein, die nur an die Ecken greifen.

Bei einer Ausführungsvariante der erfindungsgemäßen Vorrichtung bildet mindestens eines von zwei gegenüberliegend angeordneten Klemm- und/oder Greifelementen zum kraft- und/oder formschlüssigen Erfassen des mindestens einen Stückgutes wenigstens zwei Kontaktflächen, wenigstens zwei Kontaktflächenpaare und/oder wenigstens zwei Kontaktbereiche für das mindestens eine kraft- und/oder formschlüssig zu erfassende Stückgut, insbesondere für zwei oder mehr kraft- und/oder formschlüssig zu erfassende Stückgüter aus, die entfernt voneinander an gegenüberliegenden Endbereichen des jeweiligen mindestens einen der zwei gegenüberliegend angeordneten Klemm- und/oder Greifelemente angeordnet sind. Mit diesen entfernt voneinander angeordneten Endbereichen der Klemm- und/oder Greifelementen sind insbesondere die in Längserstreckungsrichtung der jeweiligen Greifbacken befindlichen endseitigen Konturbereiche gemeint, wie sie oben zur form- und/oder kraftschlüssigen Erfassung der Stückgüter definiert wurden. Zwischen diesen endseitigen Abschnitten, die definitionsgemäß voneinander beabstandet sind, können Bereiche ohne solche Konturen oder mit schwächer ausgebildeten Konturen angeordnet sein, da die Stückgüter sich aufgrund ihrer Kontaktierung gegenseitig abstützen und stabilisieren, insbesondere beim gleichzeitigen Erfassen von mehreren Stückgütern, insbesondere von drei oder mehr Stückgütern.

Die Klemm- und/oder Greifelemente des Manipulators können insbesondere Gegenflächen aufweisen oder solche Gegenflächen ausbilden, die weitgehend alle auftretenden Kräfte und Momente beim Beschleunigen während des Umsetzens des jeweiligen Stückgutes aufnehmen bzw. die sich und/oder das Stückgut gegenseitig abstützen.

Von Vorteil kann es sein, wenn mindestens eines von zwei gegenüberliegend angeordneten Klemm- und/oder Greifelementen wenigstens ein Funktionselement aufweist, das reversibel elastisch verformbar ausgebildet ist und einen Anlagebereich zum klemmenden, form- und/oder kraftschlüssigen Erfassen des mindestens einen Stückgutes bereitstellt. Auch kombinierte Bauteile sind hierfür bzw. für das Funktionselement denkbar, so z.B. solche mit konkaven Flächen mit elastischen Bereichen, geeignet geformte Gummielemente etc. Weiterhin kann es von Vorteil sein, wenn der Anlagebereich des wenigstens einen Funktionselementes des mindestens einen Klemm- und/oder Greifelements sich über einen Anteil von mindestens 30%, insbesondere von mindestens 50% einer Länge in Längserstreckung des jeweiligen Klemm- und/oder Greifelements erstreckt.

Schließlich kann die Vorrichtung eine Ausführungsvariante umfassen, bei welcher der Anlagebereich zwischen den wenigstens zwei Kontaktflächen, zwischen den wenigstens zwei Kontaktflächenpaaren und/oder zwischen den wenigstens zwei Kontaktbereichen für das mindestens eine kraft- und/oder formschlüssig zu erfassende Stückgut, insbesondere für zwei oder mehr kraft- und/oder formschlüssig zu erfassende Stückgüter angeordnet ist. Diese wenigstens zwei Kontaktflächen, Kontaktflächenpaare und/oder Kontaktbereiche sind vorzugsweise jeweils entfernt voneinander an gegenüberliegenden Endbereichen des jeweiligen mindestens einen von zwei gegenüberliegend angeordneten Klemm- und/oder Greifelementen ausgebildet.

Wenn im vorliegenden Zusammenhang von gegenüberliegend angeordneten Klemm- und/oder Greifelementen die Rede ist, so können damit insbesondere gegeneinander zustellbare Klemmbacken eines Greifkopfes o. dgl. gemeint sein, die das Stückgut an dessen Längsseiten erfassen. Es sind jedoch auch zahlreiche andere Greif- und/oder Erfassungsprinzipien sinnvoll, ggf. auch kombinierte. So kann wahlweise auch ein Unterdruckgreifer zur Unterstützung zum Einsatz kommen, der bspw. mit beweglichen mechanischen Greifelementen kombiniert sein kann. Grundsätzlich umfasst der Begriff des Manipulators bzw. der Begriff der Klemm- und/oder Greifelemente jegliche Erfassungs- und/oder Manipulationselemente, die zur beschriebenen Wechselwirkung mit den Stückgütern geeignet sein können und entsprechend ausgestattet sind.

Weiterhin schlägt die vorliegende Erfindung zur Lösung der oben genannten Aufgabe ein Verfahren zum Umgang mit in mindestens einer Reihe hintereinander bewegten Stückgütern vor, bei dem die in einer Reihe ohne Abstände oder mit minimalen Abständen unmittelbar aufeinanderfolgende Stückgüter als geschlossene Formation transportiert werden und mindestens ein transportiertes Stückgut aus der geschlossenen Formation mittels wenigstens zwei gegenüberliegend angeordneter, insbesondere paarweise gegenüberliegend angeordneter Klemm- und/oder Greifelemente klemmend und/oder formschlüssig erfasst, von der geschlossenen Formation räumlich abgetrennt und in eine definierte relative Zielposition und/oder Zielausrichtung gegenüber nachfolgenden Stückgütern gebracht wird. Es sollte allerdings nicht unerwähnt bleiben, dass die Erfassung nur eines Stückguts den etwas weniger häufigen Fall, ggf. auch den Ausnahmefall darstellt, während der etwas häufiger auftretende Fall bzw. der als Normalfall zu bezeichnende Fall die gleichzeitige Erfassung von zwei, drei oder mehr hintereinander in geschlossener Formation transportierten Stückgütern ist, wobei hierbei in aller Regel die jeweils zuvorderst zum Manipulator gelangenden Stückgüter der Reihe erfasst werden.

Bei dem Verfahren wird das mindestens eine transportierte Stückgut durch eine Zustellbewegung der wenigstens zwei gegenüberliegend und/oder paarweise gegenüberliegend angeordneten Klemm- und/oder Greifelemente klemmend, kraft- und/oder formschlüssig erfasst, wonach das Stückgut bzw. die Mehrzahl von Stückgütern durch eine gemeinsame Bewegung der wenigstens zwei Klemm- und/oder Greifelemente von der geschlossenen Formation räumlich abgetrennt wird und über die wenigstens zwei Klemm- und/oder Greifelemente in die definierte relative Zielposition und/oder Zielausrichtung gegenüber nachfolgenden Stückgütern gebracht wird.

Bei dem Verfahren ist vorzugsweise vorgesehen, dass bei dem Erfassungsvorgang zwischen dem mindestens einen Stückgut und mindestens einem der wenigstens zwei gegenüberliegend angeordneten Klemm- und/oder Greifelemente eine kraft- und/oder formschlüssige Verbindung ausgebildet und zumindest solange aufrechterhalten wird, bis das mindestens eine Stückgut in die Zielposition und/oder Zielausrichtung gebracht ist. Wahlweise kann diese kraft- und/oder formschlüssige Verbindung auch vor Erreichung der Zielposition gelockert oder aufgehoben werden, was insbesondere dann der Fall sein kann, wenn die endgültige Zielposition und/oder die endgültige Ausrichtung für das Stückgut oder für die Mehrzahl von Stückgütern erst durch weitergehende Manipulationsschritte, bspw. durch ein Verschieben innerhalb des Erfassungsbereichs mit Hilfe von anderen Stückgütern erreicht werden sollen. Bei solchen mehrstufigen Positionierungsvorgängen kann der Manipulator gleichzeitig oder in zeitlich aufeinanderfolgenden Phasen als Greifer und/oder als Schieber eingesetzt werden.

Bei dem Verfahren ist vorzugsweise vorgesehen, dass beim Ausbilden der kraft- und/oder formschlüssigen Verbindung mindestens eines von zwei gegenüberliegend angeordneten Klemm- und/oder Greifelementen mit einer Außenkontur zumindest an einer Kontaktfläche und/oder an den Kontaktbereichen des wenigstens einen kraft- und/oder formschlüssig zu erfassenden Stückgutes korrespondiert. Wahlweise kann zum Ausbilden der kraft- und/oder formschlüssigen Verbindung wenigstens eine Kontaktfläche, wenigstens ein Kontaktflächenpaar und/oder wenigstens ein Kontaktbereich des mindestens einen von zwei gegenüberliegend angeordneten Klemm- und/oder Greifelementen mit einer korrespondierenden zylindrischen, kegelförmigen und/oder konkav oder mehreckig gewölbten bzw. konturierten Außenmantelfläche des mindestens einen Stückgutes flächig und/oder streifenförmig und/oder linienförmig und/oder punktuell in Anlage gebracht werden.

In diesem Zusammenhang kann es weiterhin sinnvoll sein, wenn bei einer Ausführungsform des Verfahrens zum Ausbilden oder bei der Ausbildung der kraft- und/oder formschlüssigen Verbindung wenigstens eine Kontaktfläche, wenigstens ein Kontaktflächenpaar und/oder wenigstens ein Kontaktbereich eines ersten Klemm- und/oder Greifelementes sowie eine weitere Kontaktfläche, ein weiteres Kontaktflächenpaar und/oder ein weiterer Kontaktbereich eines dem ersten Klemm- und/oder Greifelementes gegenüberliegenden zweiten Klemm- und/oder Greifelementes jeweils mit einer korrespondierenden zylindrischen, kegelförmigen und/oder konkav oder mehreckig gewölbten bzw. konturierten Außenmantelfläche des mindestens einen Stückgutes flächig und/oder streifenförmig und/oder linienförmig und/oder punktuell in Anlage gebracht wird bzw. in Anlage gebracht werden.

Diese sehr weit gefassten Begriffe der korrespondierenden Konturen bzw. der abschnittsweise korrespondierenden Konturen meint im Wesentlichen zueinander passende bzw. aufeinander abgestimmte Formen der Greifbacken, Klemm- und/oder Greifelemente des Manipulators sowie der zu erfassenden Stückgüter. Wenn diese Konturen nicht zueinander passen, können die Stückgüter nicht mit der angestrebten Präzision und mit der erforderlichen Zuverlässigkeit erfasst und manipuliert werden. Andererseits können die Stückgüter, die bspw. durch Gebindeformationen mit nahezu beliebig geformten Einzelartikeln gebildet sein können, ggf. auch durch ungewöhnlich und/oder unregelmäßig geformte Stückgüter, die unterschiedlichsten Konturen, Außenmantelflächen, Neigungen, Hinterschnitte etc. aufweisen, die für regelmäßig geformte, auf herkömmliche bzw. bekannte Weise ausgestaltete Klemmbacken, Greiferelemente oder Klemmelemente des Manipulators unter Umständen schwer zu erfassen sein können. Um auch diese unterschiedlichen Konturen der Stückgüter für den erfindungsgemäßen Manipulator handhabbar zu machen, sind dessen Klemm- und/oder Greifelemente in der beschriebenen Weise ausgestattet und/oder ausgestaltet, was auch die Auswechselbarkeit der greifenden Teile mit umfasst, wenn ein Produktwechsel in der Verarbeitungsfolge stattfindet, d.h. wenn Stückgüter mit anderen Konturen verarbeitet werden müssen als dies in vorhergehenden Verarbeitungsphasen der Fall war.

Außerdem kann das Verfahren vorsehen, dass das mindestens eine Stückgut über die wenigstens zwei sich gegenüberliegenden Klemm- und/oder Greifelemente klemmend erfasst wird, wobei das mindestens eine Stückgut mit einem Anlagebereich wenigstens eines Funktionselementes der zwei sich gegenüberliegenden Klemm- und/oder Greifelemente in Kontakt tritt. Wobei gleichzeitig das wenigstens eine Funktionselement aufgrund dieser klemmenden Erfassung reversibel elastisch verformt wird. Der Kontakt und die reversible elastische Verformung werden vorzugsweise beibehalten, bis das mindestens eine Stückgut in die Zielposition und/oder Zielausrichtung gebracht ist. Dieses wenigstens eine elastische Element bzw. das reversibel elastische Element kann bspw. durch ein Gummielement oder durch einen Verbundwerkstoff mit den gewünschten elastischen Eigenschaften gebildet sein, der ausreichende Anteile eines Elastomermaterials aufweist. Die reversibel elastischen Eigenschaften dienen in erster Linie einer noch besseren Anpassung der aneinander gefügten Konturen, was damit auch dem besseren Halt und der besseren Verankerung der erfassten Stückgüter zwischen den Klemm- und/oder Greifelementen dient und deren Herausfallen aus den geklemmten Greifbacken des Manipulators und/oder deren Verrutschen dort verhindern kann.

Eine weitere Ausführungsvariante des erfindungsgemäßen Verfahrens sieht vor, dass bei der oder während der Erfassung, zumindest jedoch in einer Phase der Erfassung zwischen dem mindestens einen Stückgut und mindestens einem von zwei gegenüberliegend angeordneten Klemm- und/oder Greifelementen eine formschlüssige Verbindung ausgebildet wird. Diese formschlüssige Verbindung wird vorzugsweise aufrechterhalten oder beibehalten, bis das mindestens eine Stückgut in die Zielposition und/oder Zielausrichtung gebracht ist, kann jedoch ggf. auch etwas früher aufgehoben werden, wenn bspw. die oben erwähnten Bedingungen für ein abschnittsweises Schieben von einzelnen Stückgütern gegeben sind. Bei dem Verfahren ist weiterhin vorgesehen, dass das mindestens eine Stückgut über die zwei sich gegenüberliegenden Klemm- und/oder Greifelemente klemmend erfasst wird, wobei das mindestens eine Stückgut mit einem Anlagebereich wenigstens eines Funktionselementes der zwei sich gegenüberliegenden Klemm- und/oder Greifelemente in Kontakt tritt. Dieses wenigstens eine Funktionselement wird aufgrund der klemmenden Erfassung resultierend reversibel elastisch verformt. Der Kontakt und die reversible elastische Verformung werden zumindest solange beibehalten, bis das mindestens eine Stückgut in die Zielposition und/oder Zielausrichtung gebracht ist.

Bei allen zuvor beschriebenen Verfahren des erfindungsgemäßen Verfahrens kann zudem vorgesehen sein, dass dem wenigstens einem erfassten Stückgut gegenüber einer Transportgeschwindigkeit der geschlossenen Formation wenigstens eine weitere Geschwindigkeits- und/oder Richtungskomponente aufgeprägt wird. Diese Komponenten bzw. Richtungskomponenten und/oder Geschwindigkeitskomponenten sind in erster Linie vektoriell zu verstehen.

Es sei an dieser Stelle ergänzend erwähnt, dass die Stückgüter in Abweichung von den oben beschriebenen Ausführungsvarianten auch in getaktetem Zulauf zum Manipulator bzw. zu dessen Erfassungsraum befördert werden können, was Reihen endlicher Länge mit jeweils größeren Lücken zwischen solchen aufeinander folgenden Reihen bedeuten kann. Eine geschlossene Formation in einem solchen Sinne kann auch als längere Abfolge mehrerer solcher Reihen verstanden werden, was somit zwar keine lückenlose Aufeinanderfolge von Stückgütern bedeutet, jedoch in ihrer Gesamtheit aufgrund des regelmäßigen Transports mit sich regelmäßig wiederholenden Mustern von hintereinander transportierten Stückgütern ebenfalls als geschlossene Formation im weitesten Sinne angesehen werden kann. Allerdings kommt eine solche beschriebene Transportfolge von Stückgütern einer getakteten Zuförderung bzw. dem Begriff eines getakteten Zulaufs näher als einer streng lückenlosen Aufeinanderfolge von Stückgütern. Eine solche getaktete kann sich wiederholen, ggf. auch mehrfach, vielfach oder in unbestimmter Zahl. Diese getaktete Formation kann aber auch als Endlos- Formation transportiert werden, die keine Unterbrechung aufweist und eine beliebige Anzahl von Stückgütern umfasst. Aus dieser quasi-geschlossenen Formation bzw. aus diesem getakteten Zulauf wird innerhalb des Erfassungsbereichs mittels des Manipulators wenigstens ein transportiertes Stückgut klemmend und/oder kraftschlüssig und/oder formschlüssig erfasst, von der Formation räumlich abgetrennt und in eine definierte relative Zielposition und/oder Zielausrichtung gegenüber nachfolgenden Stückgütern der Formation gebracht.

Gemäß einer Ausführungsform schließt sich die unterbrechungsfrei angetriebene Horizontalfördereinrichtung in Transportrichtung unmittelbar an die wenigstens eine Transporteinrichtung an, und die Geschwindigkeiten der wenigstens einen vorzugsweise unterbrechungsfrei angetriebenen Horizontalfördereinrichtung und die Transportgeschwindigkeit der wenigstens einen Transporteinrichtung stimmen näherungsweise oder exakt überein. Die mindestens eine Transporteinrichtung kann beispielsweise durch mindestens ein Zuförderband oder eine Mehrzahl von parallelen Zuförderbändern gebildet sein, die vorzugsweise unmittelbar an die Horizontalfördereinrichtung münden und insbesondere einen ersten Transportbereich bilden. Bei Zuförderung der Stückgüter in einer zumindest weitgehend lückenlosen Formation erfolgt in dem ersten Transportbereich- und im Gegensatz zum bekannten Stand der Technik - normalerweise keine Vorgruppierung bzw. Taktbildung der Stückgüter, sondern diese erfolgt gleichzeitig mit der Positionierung durch Erfassen, Verschieben und/oder Drehen, Erreichen der Zielpositionen und/oder Zielausrichtungen und anschließendes Lösen des Manipulators von den jeweils positionierten und/oder ausgerichteten Stückgütern innerhalb des sogenannten Gruppiermoduls, das insbesondere durch die Horizontalfördereinrichtung und den oberhalb der Horizontalfördereinrichtung angeordnete mindestens eine Manipulator gebildet wird. Aus der gesamten Beschreibung wird somit deutlich, dass bei einer lückenlosen Zuförderung eine Vorgruppierung im herkömmlichen Sinne, die sich von dem Vorgang der Lagenbildung deutlich erkennen und/oder abgrenzen ließe, gar nicht stattfindet, sondern im Bewegungsverlauf zwischen der Abtrennung der jeweiligen Stückgüter von der Formation und der Erreichung der Zielpositionen aufgelöst ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1 bis 12 zeigen schematisch einen zeitlichen Ablauf eines Ausführungsbeispiels eines erfindungsgemäßen Verfahrens zum Umgang mit in mindestens einer Reihe hintereinander bewegten Stückgütern durch eine entsprechende Handhabungsvorrichtung.

Figur 13A bis 13F zeigen das Erfassen einer unterschiedlichen Anzahl von Stückgütern durch einen Manipulator der Handhabungsvorrichtung.

Figuren 14A bis 14C zeigen schematisch unterschiedliche Ausführungsformen von Greifern bzw. Greiferköpfen eines Manipulators.

Für gleiche oder gleich wirkende Elemente der Erfindung werden jeweils identische Bezugszeichen verwendet. Ferner werden der Übersicht halber nur Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung bzw. der erfinderischen Gedanken dar.

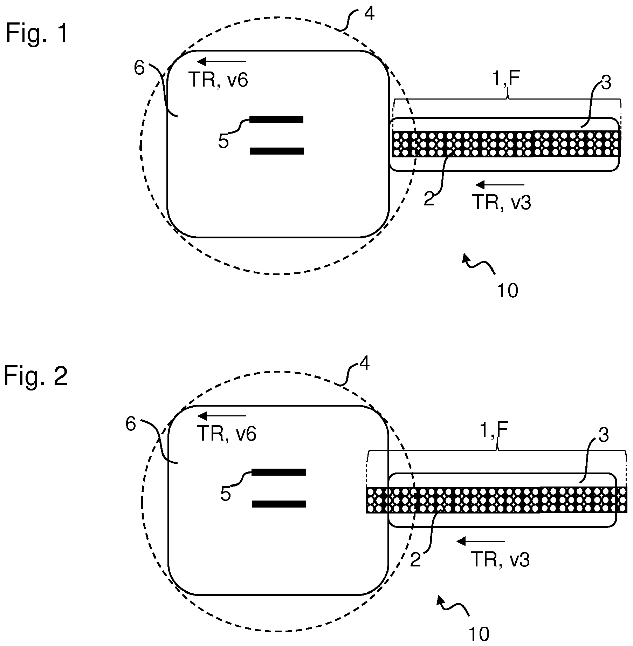

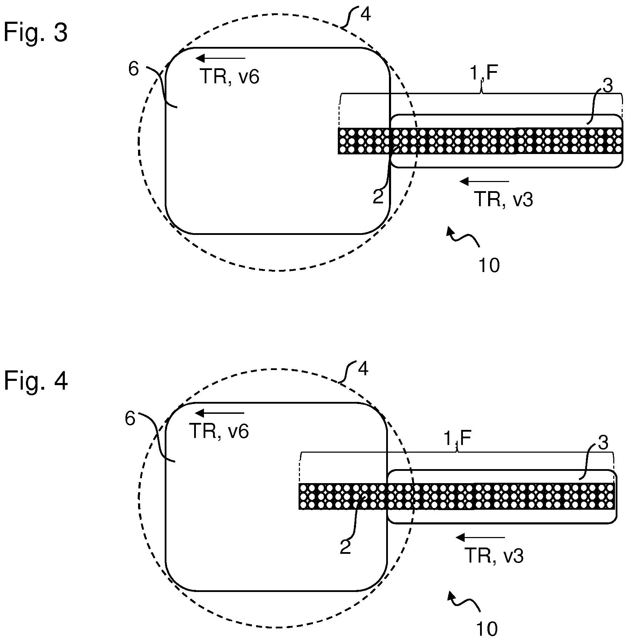

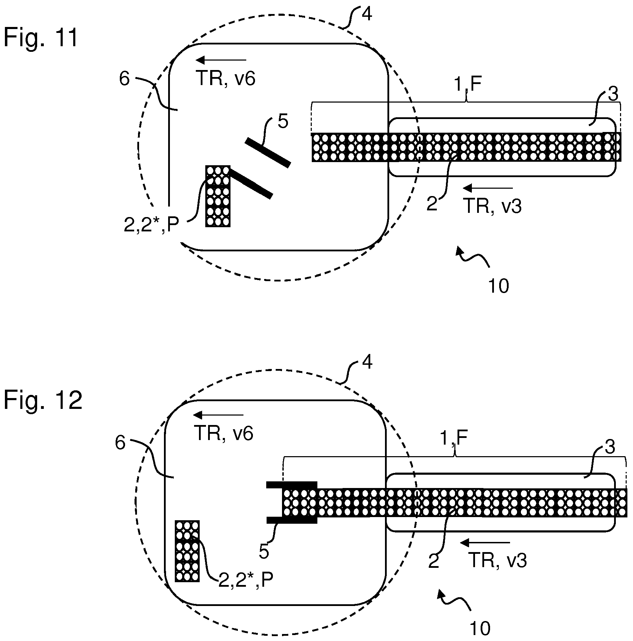

Die Figuren 1 bis 12 zeigen schematisch einen sinnvollen zeitlichen Ablauf eines Ausführungsbeispiels des erfindungsgemäßen Verfahrens zum Umgang mit in mindestens einer Reihe 1 hintereinander bewegten Stückgütern 2 durch eine entsprechende Handhabungsvorrichtung 10.

Die hier in den Figuren 1 bis 12 gezeigten Reihen 1 können bspw. in dieser Anordnung in Transportrichtung TR befördert werden und von weiteren gleichartigen oder kürzeren oder längeren Reihen gefolgt werden, wobei ggf. zwischen aufeinander folgenden Reihen Abstände vorhanden sein können. Die Abstände und Längen der jeweiligen Reihen richten sich sinnvollerweise nach dem jeweils gewünschten Lagenbild bzw. nach der Verarbeitungsgeschwindigkeit des eingesetzten Manipulators 5 bzw. nach den während eines regulären Betriebes auf Dauer aufrechtzuerhaltenden maximalen Bewegungsgeschwindigkeiten der beweglichen Teile des Manipulators 5. Ebenso denkbar sind jedoch auch endlose Reihen 1 mit einer prinzipiell endlos aufeinander folgenden Stückgutfolge, die solange in einen Erfassungsbereich 4 des Manipulators 5 befördert werden, bis ein geplanter oder ungeplanter Anlagenstopp erfolgt. Wenn im vorliegenden Zusammenhang von lückenloser Aufeinanderfolge oder von unmittelbar aufeinanderfolgenden Stückgütern 2 die Rede ist, so umfasst dies sowohl den Fall von sich berührenden Stückgüter 2 als auch den Fall der gering voneinander beabstandeten Stückgüter 2, wobei diese Fälle zufallsbedingt und/oder auf geringe Größenabweichungen der Stückgüter 2 etc. zurückzuführen sein können.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei normalerweise mehrere Artikel wie insbesondere Behälter, Flüssigkeits- und/oder Getränkebehälter zu Gebinden zusammengefasst sind.

Die gezeigte Handhabungsvorrichtung 10 umfasst eine erste Transporteinrichtung 3, über welche unmittelbar aufeinanderfolgende Stückgüter 2 in einer ersten Reihe 1 unterbrechungsfrei und/oder mit kontinuierlicher Transportgeschwindigkeit v3 in einen Erfassungsbereich 4 mindestens eines Manipulators 5 der Handhabungsvorrichtung 10 transportiert werden. Der Erfassungsbereich 4 meint im vorliegenden Zusammenhang insbesondere den maximalen und/oder den jeweils programmgesteuert vorgegebenen Bewegungsraum des Manipulators 5. Wie es die Fig. 1 ff. erkennen lassen, kann der Erfassungsbereich 4 bzw. dessen äußere räumliche Begrenzung größer sein als es die Außengrenzen der Horizontalfördereinrichtung 6 vorgeben, auf deren ungefähr horizontalen Oberseite die Stückgüter 2, 2* befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2, 2* befinden können und/oder in dem die abzusetzenden Stückgüter 2, 2* positioniert werden können.

Der Manipulator 5 kann die erfassten Stückgüter 2, 2* entweder durch verschieben neu positionieren. Zusätzlich kann noch eine Drehung der Stückgüter 2, 2* erfolgen, so dass diese eine neue Ausrichtung erhalten. Insbesondere ist im mit der vorliegend beschriebenen Handhabungsvorrichtung 10 insbesondere die winkelige Ausrichtung der zuvor erfassten und vom Manipulator 5 bewegten und/oder verschobenen und/oder gedrehten Stückgüter 2, 2* gemeint.

Die Transporteinrichtung 3 ist beispielsweise mindestens ein Förderband oder mindestens eine andere geeignete Fördereinrichtung, auf der die Stückgüter 2 vorzugsweise (jeweils) einreihig transportiert werden, wobei zwischen jeweils direkt aufeinander folgenden Stückgütern 2 keine bzw. nur eine geringfügige, gegebenenfalls prozessbedingte und/oder vorgegebene Lücke besteht. Insbesondere kann die Transporteinrichtung 3 durch ein endlos umlaufendes Förderband, eine endlose Förderkette o. dgl. gebildet sein, so dass damit die Stückgüter 2 zur Horizontalfördereinrichtung 6 angeliefert und heranbefördert werden können. Die in Reihe 1 auf der Transporteinrichtung 3 befindlichen Stückgüter 2 laufen somit in einer sogenannten geschlossenen Formation F in den Erfassungsbereich 4 des Manipulators 5 ein.

Wie bereits erwähnt, ist es optional möglich, dass die Stückgüter 2 auf einer Transporteinrichtung 3 oder auf mehreren, insbesondere parallel angeordneten Transporteinrichtungen 3 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der wenigstens einen Transporteinrichtung 3 transportiert werden.

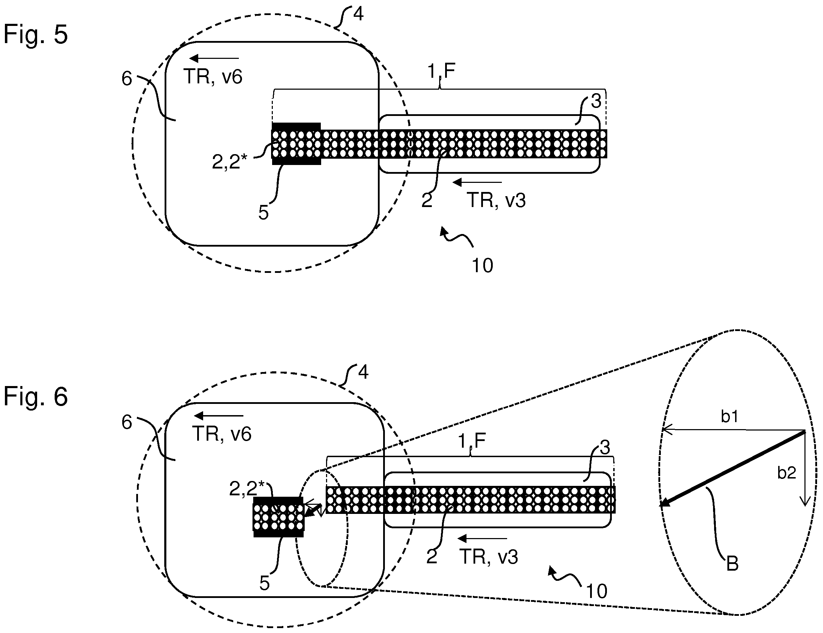

Der Manipulator 5 ist zum klemmenden und/oder formschlüssigen und/oder kraftschlüssigen Entgegennehmen von Stückgütern 2, 2* innerhalb des Erfassungsbereichs 4 ausgebildet und ausgestattet. Beispielsweise greift der Manipulator 5 mindestens ein, vorzugsweise mindestens zwei oder drei nacheinander angeordnete der in geschlossener Formation F einlaufenden Stückgüter 2, 2*, trennt diese von der einreihigen Formation F der Stückgüter ab und überführt das abgetrennte Stückgut 2* bzw. die abgetrennte Gruppe von zwei oder drei lückenlos in Reihe angeordneten Stückgütern 2* jeweils in eine Zielposition P und/oder Zielausrichtung (vgl. Fig. 5 ff.). Dabei kann vorgesehen sein, dass das Stückgut 2* bzw. die Gruppe von Stückgütern 2* seitlich gegenüber der einlaufenden Formation F an Stückgütern 2 verschoben wird und/oder es kann vorgesehen sein, dass das Stückgut 2* bzw. die Gruppe von Stückgütern 2* durch den Manipulator 5 in Transportrichtung TR von der Formation F der Stückgüter 2 beabstandet wird und/oder dass das Stückgut 2* bzw. die Gruppe von Stückgütern 2* gegenüber den Stückgütern 2 der Formation F verdreht wird o.ä.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2* in die Zielposition P und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehalten und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators 5), der die Stückgüter 2, 2* in der gewünschten Weise erfassen, verschieben, positionieren, platzieren, drehen etc. kann, um die jeweiligen Zielpositionen P und/oder Zielausrichtungen für die Stückgüter 2, 2* anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Werden Parallelreihen von Stückgütern 2 über die Transporteinrichtung 3 zum Erfassungsbereich 4 des Manipulators 5 hin transportiert, so kann vorgesehen sein, dass der Manipulator 5 bzw. dessen bewegliche und/oder dessen mit den Stückgütern 2, 2* wechselwirkende Teile jeweils wenigsten ein Stückgut 2 jeder Parallelreihe 1 greifen und bearbeiten kann.

Die schematische Draufsicht der Figur 1 zeigt insbesondere das Einlaufen der Stückgüter 2 als Reihe 1 bzw. in im Wesentlichen lückenloser Formation F über die Transporteinrichtung 3. Die Stückgüter werden in Transportrichtung TR mit einer Transportgeschwindigkeit v3 in Richtung des Erfassungsbereiches 4 des Manipulators 5 der Handhabungsvorrichtung 10 bewegt. Die Transporteinrichtung 3 ist insbesondere eine Horizontalfördereinrichtung, beispielsweise ein Förderband oder ähnliches.

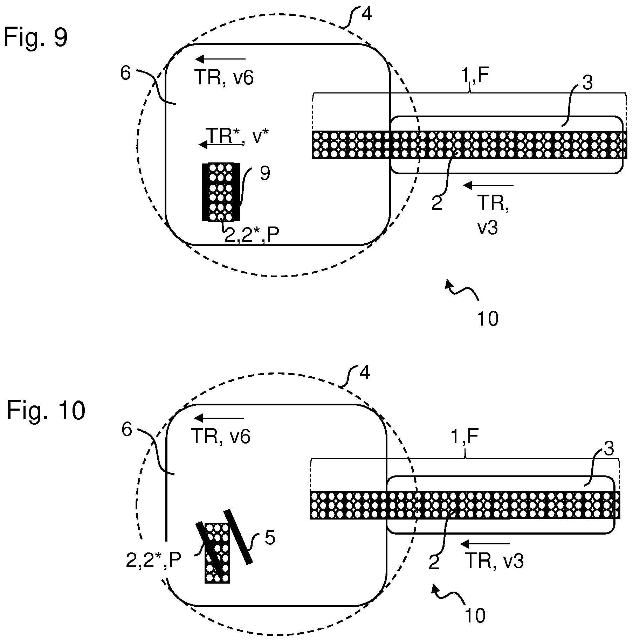

Die schematischen Draufsichten der Figuren 2 bis 4 zeigen den in Transportrichtung TR lückenlos weitergeführten Transport der Reihe 1 bzw. Formation F, die in den Erfassungsbereich 4 der Handhabungsvorrichtung 10 bzw. des Manipulators 5 gelangen. Insbesondere werden die Stückgüter 2 der Reihe 1 im Erfassungsbereich 4 ohne Unterbrechung und mit unveränderter Transportgeschwindigkeit weitertransportiert, und zwar vor dem Positionieren bzw. Erfassen durch den Manipulator 5 sowie normalerweise auch wieder nach dem Erreichen der jeweiligen Zielposition P (vergleiche Figur 9).

Wie oben bereits erwähnt, ist dem Erfassungsbereich 4 insbesondere die Horizontalfördereinrichtung 6 zugeordnet, deren die Stückgüter 2, 2* tragende Oberfläche sich mit einer Geschwindigkeit v6 bewegt. Insbesondere kann die Geschwindigkeit v6 der Horizontalfördereinrichtung 6 der Transportgeschwindigkeit v3 der Transporteinrichtung 3 entsprechen. Wahlweise können die die Transportgeschwindigkeit v3 und die Geschwindigkeit v6 auch geringfügig differieren, sofern gewährleistet werden kann, dass die ununterbrochene Förderung der Stückgüter 2, 2* zur Horizontalfördereinrichtung 6 aufrecht erhalten wird. Die in Reihe 1 über die Transporteinrichtung 3 ankommenden Stückgüter 2 können zumindest bei differierenden v3 und v6 durch den aufgrund der höheren Transportgeschwindigkeit v3 ggf. entstehenden Staudruck der nachfolgenden Stückgüter 2 auf die Horizontalfördereinrichtung 6 übergeschoben und dort unterbrechungsfrei weiter befördert werden. Allerdings ist es hierbei notwendig, diesen Staudruck durch geeignete Maßnahmen abzubauen, bspw. mittels eines gummierten Förderbandes der Horizontalfördereinrichtung 6 und/oder mittels eines gummierten Förderbandes der Transporteinrichtung 3, wahlweise auch durch ein zwischen der Transporteinrichtung 3 und der Horizontalfördereinrichtung 6 befindliches sog. Bremsband, das durch eine die Stückgüter 2, 2*, 2a tragende Oberfläche mit besonders hohem Reibungskoeffizienten charakterisiert ist. Diese oder andere geeignete Maßnahmen sorgen für eine präzise Positionierung der jeweiligen Stückgüter 2, 2* am jeweiligen Erfassungsort im Erfassungsbereich 4, so dass eine präzise Übernahme durch den Manipulator 5 zu gewährleisten ist. Es soll jedoch betont werden, dass solche Maßnahmen zum Abbau eines ggf. vorhandenen bzw. entstandenen Staudrucks nicht wünschenswert sind, auch wenn sie je nach gewählter Konfiguration der beweglichen Teile unverzichtbar bzw. sinnvoll anzuwenden sind.

Die schematischen Draufsichten der Figuren 5 bis 9 zeigen aufeinander folgende Prozessschritte eines gleichzeitigen Abgreifens von insgesamt drei Stückgütern 2 aus der Formation F durch einen Zugriff des Manipulators 5. Insbesondere erfasst der Manipulator 5 die ersten drei Stückgüter 2 der Formation F, d.h. die in Transportrichtung TR zuvorderst befindlichen Stückgüter 2 der Formation F. Die vom Manipulator 5 erfassten Stückgüter 2 - d.h. die in der Formation F zuvorderst erfassten Stückgüter 2 - werden nachfolgend zur Unterscheidung von den übrigen in der Formation F bzw. der Gesamtformation angeordneten Stückgütern 2 mit dem Bezugszeichen 2* bezeichnet.

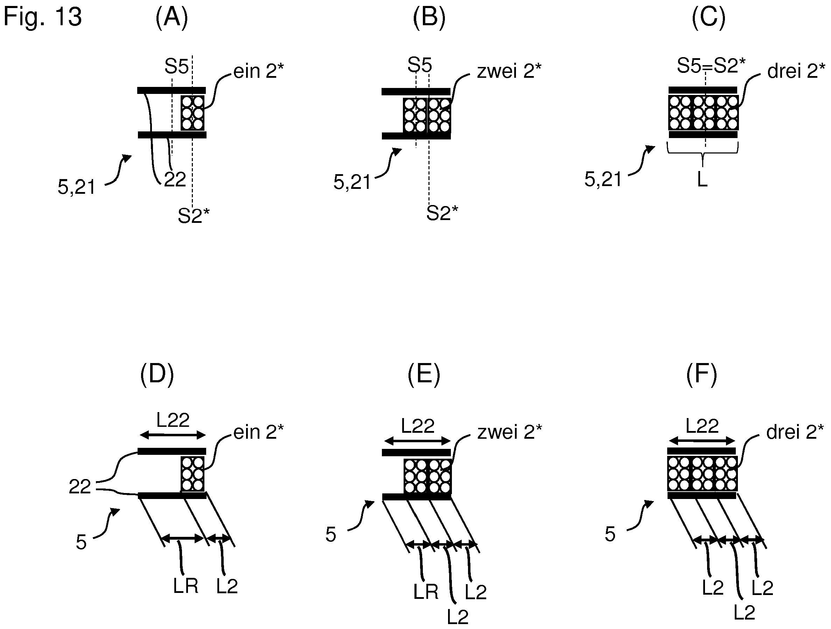

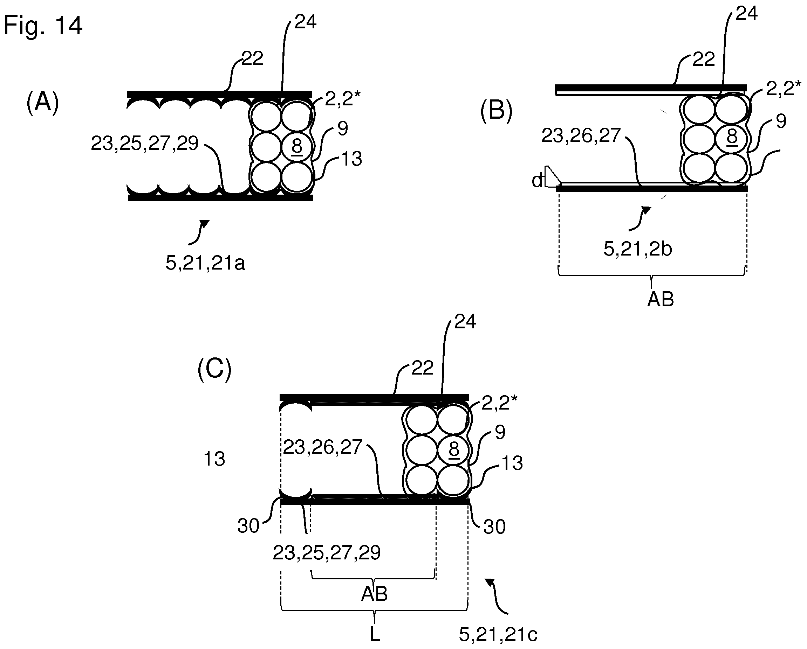

Der Manipulator 5 kann in diesem Ausführungsbeispiel und/oder im Zusammenhang mit der gesamten vorliegenden Erfindung bspw. durch einen Greiferkopf 21 mit seitlichen Klemmbacken 22 o.ä. gebildet sein (vergleiche Figuren 13A bis 13F und 14A bis 14C) oder einen solchen Greiferkopf 21 mit seitlichen Klemmbacken 22 umfassen, welche typischerweise beim Erfassen der Stückgüter 2, 2* gegeneinander zustellbar sind, um die Stückgüter 2, 2* form- und/oder kraftschlüssig zu erfassen bzw. zu klemmen, wogegen die Klemmbacken 22 beim Erreichen der Zielposition P jeweils wieder geöffnet werden können. Wenn im vorliegenden Zusammenhang bzw. bei der vorliegenden Beschreibung daher von einem Manipulator 5 und/oder von einem Greifer oder Greiferkopf 21 die Rede ist, so können diese Begriffe als Synonyme verwendet sein; ggf. ist der Greifer oder Greiferkopf 21 auch als Unterbaugruppe oder Bestandteil des umfassender zu verstehenden Manipulators 5 anzusehen.

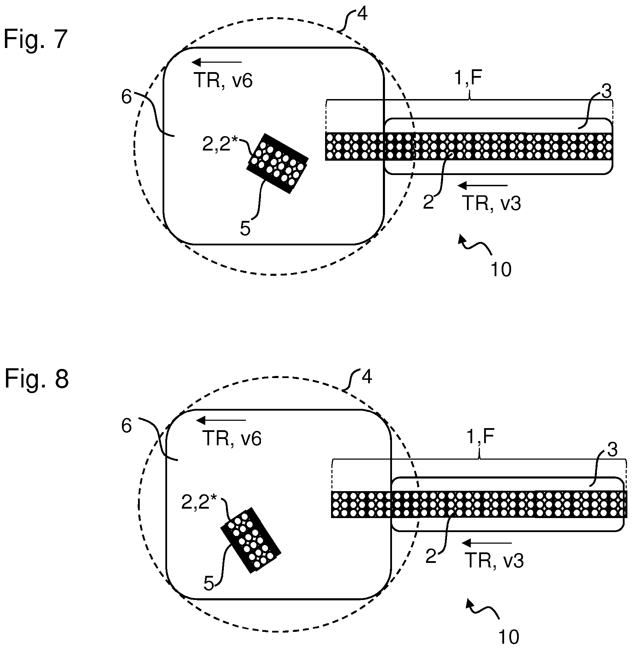

Der Greifer bzw. Greiferkopf 21 des Manipulators 5 kann im dargestellten Ausführungsbeispiel an den ersten drei Stückgütern 2 bzw. 2* der Formation F ansetzen, diese klemmend und/oder kraft- und/oder formschlüssig erfassen und von der Formation F insbesondere räumlich abtrennen. Die Stückgüter 2* werden anschließend durch den Manipulator 5 in eine definierte relative Zielposition P (vergleiche Figur 9) gegenüber den in der Formation F nachfolgenden Stückgütern 2 gebracht. Hierbei kann ggf. eine überlagerte Drehung der Stückgüter 2* erfolgen, so dass die Zielausrichtung der Stückgüter 2* ebenfalls gegenüber den Stückgütern 2 der Formation F geändert sein kann (vgl. die Figuren 7 bis 12).

Vorzugsweise werden die erfassten Stückgüter 2* hierbei in einem einzigen, insbesondere unterbrechungsfreien Manipulationsschritt in die Zielposition P und/oder Zielausrichtung überführt, geschoben und/oder gedreht.

Außerdem kann hierbei wahlweise vorgesehen sein, dass der Manipulator 5 die erfassten Stückgüter 2* beispielsweise um einen geringen Betrag anhebt, insbesondere aus dem Auflagekontakt zur Oberseite der Horizontalfördereinrichtung 6 bringt, zur Zielposition P befördert und anschließend auf der Horizontalfördereinrichtung 6 innerhalb des Erfassungsbereiches 4 wieder absetzt. Dieser Umsetzbewegung kann eine Drehbewegung des Manipulators 5 mitsamt den erfassten Stückgütern 2 bzw. 2* überlagert sein. Alternativ hierzu kann vorgesehen sein, dass der Manipulator 5 die Stückgüter 2* auf der Horizontalfördereinrichtung 6 verschiebt, ohne dass er sie vollständig von der Oberfläche der Horizontalfördereinrichtung 6 abhebt, indem er insbesondere eine Geschwindigkeitskomponente und/oder eine Richtungskomponente auf die abgegriffenen Stückgüter 2* aufbringt. Auch hier kann wieder eine überlagerte Drehbewegung des Manipulators 5 vorgesehen sein.

Hinsichtlich der beschriebenen Drehbewegungen kann erwähnt werden, dass der Manipulator 5 bzw. dessen Greifer bzw. Greiferkopf wahlweise um einen gewünschten Ausrichtungswinkel für die Stückgüter 2 bzw. 2* rotieren kann, wahlweise um bspw. 45°, um bspw. ca. 90° oder auch um andere Drehwinkel. Besonders vorteilhaft kann eine Endlos-Drehbarkeit des Greiferkopfes des Manipulators 5 sein, da auf diese Weise bei Drehungen um bspw. 180° oder um 90° eine schnelle Weiterdrehung während der Rückbewegung zur Formation F zurück erfolgen kann, die ggf. eine kürzere Zeitdauer erfordert als eine Rückdrehung im entgegengesetzten Drehsinn. Auf diese Weise können durch eine solche Endlos-Drehbarkeit des Greiferkopfes mit prinzipiell unbegrenztem Drehwinkel immer die jeweils schneller durchführbaren Drehrichtungen gewählt werden; dies betrifft sowohl die Positionierung der erfassten Stückgüter 2 bzw. 2* als auch "Leerfahrten" bei den Rückstellbewegungen des Manipulators 5 in Richtung zur Formation F, um dort weitere Stückgüter 2 bzw. zumindest ein weiteres Stückgut 2 aufzunehmen.

Bei den hier beschriebenen Manipulationsschritten ist insbesondere vorgesehen, dass der Manipulator 5 bzw. dessen Greiferkopf zumindest beim Erfassen der drei Stückgüter 2* und bei deren Freigabe in der Zielposition P und Zielausrichtung mit einer Stellgeschwindigkeit bewegt wird, die annähernd bzw. exakt der Transportgeschwindigkeit v3 entspricht, mit der sich die geschlossene Formation F der Stückgüter 2 bewegt.

Wie es in den Figuren 10 bis 12 dargestellt ist, löst sich der Manipulator 5 anschließend wieder von den in ihrer Zielposition P angeordneten Stückgütern 2*, bspw. durch Öffnen der Greiferbacken, und kann nach einer Rückbewegung nunmehr weitere nachfolgende Stückgüter 2 aus der Formation F abgreifen, wie dies bereits anhand der Figuren 5 ff. beschrieben wurde.

Während die drei mit dem Manipulator 5 erfassten Stückgüter 2* vom Manipulator 5 in die Zielposition P gebracht werden, werden die übrigen Stückgüter 2 der Formation F unterbrechungsfrei und/oder mit unveränderter Transportgeschwindigkeit v3 und/oder Geschwindigkeit v6 auf der Transporteinrichtung 3 bzw. der Horizontalfördereinrichtung 6 weiter transportiert.

In dem Zeitfenster zwischen dem Erfassen der drei Stückgüter 2* durch den Manipulator 5 und deren Freigabe in der Zielposition P ist die Geschwindigkeit des Manipulators 5 in vielen Fällen gegenüber der Transportgeschwindigkeit v3 der Formation F erhöht, da die Stückgüter 2* von der übrigen Formation F distanziert werden. Die Bewegungsrichtung B des Manipulators 5 ergibt sich aus einer Vektoraddition einer ersten Bewegungskomponente b1 parallel zur Transportrichtung TR der Formation F und einer zweiten Bewegungskomponente b2 senkrecht zur Transportrichtung TR der Formation F, wie dies insbesondere anhand der Fig. 6 verdeutlicht ist. Dadurch werden die vom Manipulator 5 erfassten Stückgüter 2* in die definierte Zielposition P - diese befindet sich grundsätzlich im Erfassungsbereich 4 des Manipulators 5 - bewegt. Die Zielposition P befindet sich in Transportrichtung TR beabstandet vor der Formation F und seitlich verschoben zur Formation F, zumindest was das gezeigte Ausführungsbeispiel betrifft (vgl. Fig. 9).

Nachdem die Stückgüter 2* ihre Zielposition P erreicht haben und sich der Manipulator 5 von diesen gelöst hat, werden die Stückgüter 2* in Transportrichtung TR und mit der Geschwindigkeit v6 auf der Horizontalfördereinrichtung 6 weiterbewegt. Die Zielposition P ist insbesondere eine Relativposition zu den nachfolgenden, nicht vom Manipulator 5 in ihrer Position veränderten Stückgütern 2, wobei wahlweise die Drehrichtung geändert sein kann (vgl. Fig. 6 ff.) oder die Stückgüter 2* ohne Drehbewegung nach vorne in Richtung TR verschoben sein können (fehlende Bewegungskomponente b2; hier nicht gezeigt). Da bei der hier beschriebenen Ausführungsform die Geschwindigkeit v6 der Horizontalfördereinrichtung 6 der Transportgeschwindigkeit v3 der Transporteinrichtung 3 entspricht, und da die Transportrichtungen TR der Transporteinrichtung 3 und der Horizontalfördereinrichtung 6 ebenfalls korrespondieren bzw. übereinstimmen, werden die durch den Manipulator in ihrer Position und/oder Ausrichtung veränderten Stückgüter 2* bei und/oder unmittelbar nach Erreichen ihrer Zielposition P ohne Unterbrechung und/oder Geschwindigkeits- und/oder Richtungsänderung weitertransportiert.

Nunmehr kann der Manipulator 5 weitere Stückgüter 2 aus der Formation F erfassen und in eine definierte relative Zielposition bringen. Diese erwähnten Manipulationsschritte können sich ein- oder mehrfach oder endlos wiederholen, wahlweise in jeweils abweichender Gestalt und mit zahlreichen Modifikationen, gesteuert von der Steuereinrichtung (nicht dargestellt). Die Zielposition dieser weiteren Stückgüter 2 ist insbesondere derart, dass sich aus den in aufeinanderfolgenden Manipulationsschritten erfassten Stückgütern 2, 2* beispielsweise eine zweite Reihe an einer neuen Position ausbildet (vgl. auch Figuren 13 bis 16). Hierbei ist immer die Bewegung zu berücksichtigen, die die im ersten Schritt positionsveränderten Stückgüter 2* währenddessen aufgrund der Geschwindigkeit v6 der Horizontalfördereinrichtung 6 ausführen.

Die Zielposition P der weiteren Stückgüter 2 kann auch derart definiert sein, dass resultierend aus mehreren Stückgütern 2, 2* aufgrund mehrerer Manipulationsschritte, wobei jeweils Stückgüter 2 durch den Manipulator 5 aus der Formation F abgegriffen werden, eine Gruppierung für eine palettierfähige Lage oder Teillage gebildet wird.

Auch nahezu beliebige Kombinationen, kumulativ, gespiegelt und/oder alternativ etc. gesehen, der beschriebenen Manipulationsschritte sind sinnvoll einsetzbar, um zu gewünschten Lagenbildern zu gelangen, so dass die solchermaßen zu Lagen zusammengestellten Stückgutanordnungen anschließend weiterbehandelt und/oder palettiert werden können.

Figur 13A bis 13C zeigen das Erfassen einer unterschiedlichen Anzahl von Stückgütern 2, 2* durch einen Manipulator 5 der in den Figuren 1 bis 12 beschriebenen Handhabungsvorrichtung 10.

Der Manipulator 5 besitzt vorzugsweise eine bestimmte Aufnahmekapazität für mehrere Stückgüter 2, 2*. Jedoch ist vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Formation F erfasst (vergleiche Figuren 1 bis 12). Dies wird insbesondere über eine Steuereinrichtung (nicht dargestellt) kontrolliert und/oder geregelt. Die Anzahl der erfassten Stückgüter 2, 2* variiert hierbei zwischen eins und der maximalen Anzahl gemäß der Aufnahmekapazität des Manipulators 5. Auch wenn in den dargestellten Ausführungsbeispielen eine maximale Aufnahmekapazität von bis zu drei Stückgütern 2, 2* je Manipulator 5 beschrieben wird, so sind die genannten Überlegungen auch auf Manipulatoren 5 mit geringerer oder größerer maximaler Aufnahmekapazität analog anwendbar.

Der in den Figuren 13 schematisch dargestellte Manipulator 5 ist beispielsweise als Greiferkopf 21 ausgebildet und weist zum klemmenden und/oder formschlüssigen Entgegennehmen von Stückgütern 2, 2* zwei starre, bewegliche und/oder gegeneinander zustellbare, sich gegenüberliegende Klemm- und/oder Greifmittel auf, insbesondere zwei Klemmbacken 22 oder Greiferpaddel oder ähnliches. Zwischen den Klemmbacken 22 kann das mindestens eine Stückgut 2, 2* geklemmt und dadurch entsprechend zur gewünschten Zielposition P (vergleiche Figur 9) bewegt werden. Die Länge L der Klemmbacken 22 ist derart gewählt, dass eine maximale Anzahl an Stückgütern 2*, welche einen Takt für die Lage bilden, abgegriffen werden können. Der in den Figuren 13 dargestellte Manipulator 5 kann insbesondere ein Stückgut 2* (vergleiche Figur 13A), zwei Stückgüter 2* (vergleiche Figur 13B) oder drei Stückgüter 2* (vergleiche Figur 13C) erfassen.

Hierbei kann vorgesehen sein, dass eine, durch das wenigstens eine, von den mindestens zwei Klemmbacken 22 des wenigstens einen Manipulators 5 erfasste Stückgut 2* definierte erste vertikale Symmetrieebene S2* beabstandet ist von einer zweiten vertikalen Symmetrieebene S5, die durch den Manipulator 5 bzw. durch dessen Klemmbacken 22 definiert ist. Damit kann insbesondere definiert sein, dass das mindestens eine vom Manipulator 5 erfasste Stückgut 2* dort nicht mittig bzw. symmetrisch zur vertikalen Mittel- und/oder Drehachse des Manipulators 5 bzw. dessen Klemmbacken 22 erfasst und positioniert ist, während es verschoben und/oder in Richtung der Zielposition P (vergleiche Figur 9) gebracht wird, ggf. unter gleichzeitiger Rotation. Dies gilt gleichermaßen für zwei oder mehr erfasste Stückgüter 2*, die ebenfalls außermittig bzw. unsymmetrisch im Manipulator 5 geklemmt sein können.

Figuren 13A und 13B zeigen das unsymmetrische Beladen eines Manipulators 5, der zwischen den Klemmbacken 22 bis zu drei Stückgüter 2* erfassen kann. Wird der Manipulator 5 nur mit einem oder zwei Stückgütern 2* beladen, so erfolgt die Anordnung der Stückgüter 2* außermittig zu den Klemmbacken 22, d.h., die erste vertikale Symmetrieebene S2* ist beabstandet von der zweiten vertikalen Symmetrieebene S5 des Manipulators 5. Wird der Manipulator 5 dagegen vollständig mit drei Stückgütern 2* beladen, dann fallen die erste vertikale Symmetrieebene S2* und die zweite vertikale Symmetrieebene S5 des Manipulators 5 zusammen, was in der Figur 13C verdeutlicht ist.

Die Figuren 13D, 13E und 13F verdeutlichen denselben Zusammenhang nochmals mit anderen Bezeichnungen und anhand der nachfolgenden Gleichungs- und Ungleichungszusammenhänge. So sei L22 die Gesamtlänge der Klemmbacken 22 des Manipulators 5. L2 sei die Länge eines Stückgutes 2 bzw. 2*, das sich aktuell zwischen den Klemmbacken 22 befindet. Dementsprechend sei LR die jeweils nicht von Stückgütern 2 bzw. 2* besetzte Restlänge oder Leerlänge zwischen den Klemmbacken 22 des Manipulators 5. Wie es die Figuren 13D, 13E und 13F gemeinsam veranschaulichen, gilt bei einer Klemmbackenlänge L22, die der dreifachen Länge einer Stückgutlänge L2 entspricht, der generelle Zusammenhang:

$$LR = (3 - x) \cdot L2,$$

wobei x die Anzahl der jeweils zwischen den Klemmbacken 22 geklemmten, d.h. aktuell im Manipulator 5 befindlichen Stückgüter 2* ist. Demzufolge gilt bei nur einem im Manipulator 5 befindlichen Stückgut 2, 2*:

$$x = 1,$$

was gleichzeitig der Darstellung der Figur 13A sowie der Figur 13D entspricht, folgender Sonderfall:

$$LR = (3 - x) \cdot L2 = 2 \cdot L2$$

In entsprechender Weise gilt bei zwei unsymmetrisch im Manipulator 5 befindlichen Stückgütern 2, 2*:

$$x = 2,$$

was gleichzeitig der Darstellung der Figur 13B sowie der Figur 13E entspricht, folgender Sonderfall:

$$LR = (3 - x) \cdot L2 = 1 \cdot L2 = L2$$

In dem in Figur 13F gezeigten Sonderfall der symmetrischen Beladung des Manipulators 5 mit insgesamt drei Stückgütern 2* (vergleiche hierzu auch Figur 13C mit den zusammenfallenden Symmetrieebenen S2* und S5) gilt folglich:

$$x = 3,$$

woraus sich für die Restlänge LR ein Wert von Null errechnet:

$$LR = (3 - x) \cdot L2 = 0 \cdot L2 = 0$$

Bei den mit Bezug auf die Figuren 13A bis 13F angestellten Überlegungen wird generell von einer unsymmetrischen Beladung des Manipulators 5 bzw. von einem asymmetrischen Greifen ausgegangen, wobei die zwischen den Klemmbacken 22 befindlichen Stückgüter 2* an einem Rand der Klemmbacken 22 angeordnet sind, so dass die nicht belegte Restlänge LR immer nur einseitig auftritt, nicht jedoch beidseitig der zwischen den Klemmbacken 22 befindlichen Stückgüter. Aus diesem Grund lässt sich weiterhin feststellen, dass eine unsymmetrische Beladung des Manipulators 5 bzw. ein asymmetrisches Greifen immer dann gegeben ist, wenn beide der folgenden Bedingungen gelten:

$$L22 > x \cdot L2,$$

und

$$LR \geq (L22 - x \cdot L2) \cdot \tfrac{1}{2}$$

wobei x generell die Werte Null, Eins, Zwei oder Drei annehmen kann, während x zur Erfüllung der obigen Ungleichungen bei unsymmetrischer Beladung bzw. bei asymmetrischem Greifen im gezeigten Ausführungsbeispiel lediglich die Werte Eins (x = 1; vgl. Figur 13D) oder Zwei (x = 2; vgl. Figur 13E) annehmen darf, da ansonsten ein leerer Manipulator 5 (bei x = 0; nicht gezeigt) oder ein voll beladener und symmetrisch beladener Manipulator 5 (bei x = 3; vgl. Figur 13F) gegeben wäre.

Es sei an dieser Stelle der Vollständigkeit halber erwähnt, dass auch ein Fall eines symmetrischen Greifens mit nicht voll besetztem Manipulator 5 denkbar wäre, so dass zwischen den Klemmbacken 22 beispielsweise zwei Stückgüter 2* mittig angeordnet sein könnten, so dass auch die jeweiligen Symmetrieebenen S2* der Stückgüter 2* und S5 des Manipulators 5 zusammenfallen könnten. Dieser Fall wäre mit den obigen Formeln nicht darstellbar, da hierbei zwar die obige Ungleichung (L22 > x · L2) gelten würde. Allerdings wäre bei einer solchen Greifsituation die gesamte Restlänge LR zu gleichen Teilen auf beide Randabschnitte zwischen den Klemmbacken 22 verteilt, so dass die untere Ungleichung [LR ≥ (L22 - x · L2) · ½] nicht erfüllt wäre.

Der Manipulator 5 bzw. Greiferkopf 21 ist zur Änderung der Geschwindigkeit und/oder der Richtung des mindestens einen erfassten Stückgutes 2, 2* ausgebildet. Weiterhin kann der Manipulator 5 bzw. Greiferkopf 21 zusätzlich zum Drehen des mindestens einen erfassten Stückgutes 2, 2* ausgebildet sein. Beispielsweise befindet sich der oben beschriebene Greiferkopf 21 an einem Drehgelenk und kann durch Rotation um einen definierten Winkel von beispielsweise 90° die Ausrichtung der zwischen den Klemmbacken 22 erfassten Stückgüter 2, 2* verändern.

In diesem Fall kann es sich bei dem zur Überführung des mindestens einen Stückgutes 2, 2* in die Zielposition P (vergleiche Figur 9) und/oder Zielausrichtung vorgesehenen Teil des Manipulators 5 um einen Greiferkopf 21 handeln, der bspw. an beweglich gelagerten Auslegerarmen gehaltert und gelagert ist, welche Auslegerarme wiederum typischerweise an einem Gestell oder Rahmen o. dgl. gestellfest gelagert sind. Eine solche - auch als Parallelkinematik- Anordnung bekannte - Manipulatoraufhängung bzw. -anordnung ermöglicht die gewünschte Beweglichkeit des Greiferkopfes 21, der die Stückgüter 2, 2* in der gewünschten Weise erfassen, verschieben, positionieren, platzieren, drehen etc. kann, um die Zielpositionen P und/oder Zielausrichtungen für die Stückgüter 2, 2* anfahren zu können.

Hinsichtlich der beschriebenen Drehbewegungen kann erwähnt werden, dass der Manipulator 5 bzw. dessen Greiferkopf 21 wahlweise um einen gewünschten Ausrichtungswinkel für die Stückgüter 2 bzw. 2* rotieren kann, wahlweise um bspw. 45°, um bspw. ca. 90° oder auch um andere Drehwinkel. Besonders vorteilhaft kann eine Endlos- Drehbarkeit des Greiferkopfes 21 des Manipulators 5 sein, da auf diese Weise bei Drehungen um bspw. 180° oder um 90° eine schnelle Weiterdrehung während der Rückbewegung zur Formation F zurück erfolgen kann, die ggf. eine kürzere Zeitdauer erfordert als eine Rückdrehung im entgegengesetzten Drehsinn. Auf diese Weise können durch eine solche Endlos-Drehbarkeit des Greiferkopfes mit prinzipiell unbegrenztem Drehwinkel immer die jeweils schneller durchführbaren Drehrichtungen gewählt werden; dies betrifft sowohl die Positionierung der erfassten Stückgüter 2 bzw. 2* als auch "Leerfahrten" bei den Rückstellbewegungen des Manipulators 5 in Richtung zur Formation F, um dort weitere Stückgüter 2 bzw. zumindest ein weiteres Stückgut 2 aufzunehmen.

Figuren 14A bis 14C zeigen schematisch unterschiedliche Ausführungsformen von Greifern bzw. Greiferköpfen 21 eines Manipulators 5.

Im Stand der Technik sind Klemmgreifer mit reibungserhöhenden Anlageflächen bekannt, welche verhindern, dass die gegriffenen Artikel bzw. Stückgüter während der Positionierung aus der gegriffenen Position verloren gehen. Bei sehr hohen Positioniergeschwindigkeiten werden die zu positionierenden Artikel sehr hohen Kräften ausgesetzt. Deshalb reicht die reine Klemmkraft und die damit erzeugte Reibung nicht mehr aus, um die Artikel sicher zu halten.

Erfindungsgemäß sind die Greiferköpfe 21 derart modifiziert, dass während des Greifens der Artikel bzw. Stückgüter 2, 2* bevorzugt eine Art von Formschluss erzeugt wird. Die Ausgestaltung kann auf unterschiedliche Art und Weise erfolgen. Der erfindungsgemäße Greiferkopf 21 kann dabei eine Kombination verschiedener Elemente vereinen.

Die dargestellten Greiferköpfe 21 sind insbesondere zum Greifen von Stückgütern 2, 2* in Form von Gebinden geeignet. Ein Gebinde umfasst gemäß dargestelltem Ausführungsbeispiel sechs Flaschen 8, die in zwei Reihen angeordnet sind und von einer Schrumpffolie 9 umhüllt sind und durch diese zusammengehalten werden. Die Greiferköpfe 21 sind aber auch geeignet, Gebinde aus beispielsweise acht in zwei Reihen angeordneten Flaschen 8, Gebinde bestehend aus zwei oder drei in einer Reihe angeordneten Flaschen 8, Gebinde bestehend aus neun in drei Reihen angeordnete Flaschen 8 oder ähnliches zu greifen.

Die Greiferköpfe 21 bestehen vorzugsweise aus zwei einander gegenüberliegend angeordneten Greiferpaddeln oder Klemmbacken 22. Die Greiferköpfe 21 können auch aus einer Mehrzahl sich paarweise gegenüberliegend angeordneten Klemm- und/oder Greifelemente bestehen. Diese sind zum klemmenden und/oder kraft- und/oder formschlüssigen Erfassen sowie zum Abtrennen und Überführen des jeweiligen mindestens einen Stückgutes 2, 2* in eine Zielposition P (vergleiche Figur 9) und/oder Zielausrichtung ausgebildet. Insbesondere wirken die mindestens zwei Greiferpaddel oder Klemmbacken 22 jeweils paarweise miteinander zusammen und sind beispielsweise gegeneinander beweglich, um die Artikel bzw. Stückgüter 2, 2* zwischen sich zu greifen und insbesondere zwischen sich zu klemmen. Die zwischen den Stückgütern 2, 2* und den Klemmbacken 22 des Greiferkopfes 21 ausgebildete kraft- und/oder formschlüssige Verbindung wird zumindest solange aufrechterhalten bis das mindestens eine Stückgut 2, 2* in die gewünschte Zielposition P (vgl. Figur 9) und/oder Zielausrichtung gebracht ist. Alternativ kann die kraft- und/oder formschlüssige Verbindung ggfl. auch etwas früher aufgehoben werden, wenn bspw. ein abschnittsweises Schieben von einzelnen Stückgütern vorgenommen werden soll.

Bei dem in Figur 14A dargestellten Greiferkopf 21a weisen die beiden gegenüberliegend angeordneten Klemmbacken 22 auf den zueinander weisenden Innenseiten 23 jeweils Kontaktflächen 27 für die Stückgüter 2, 2* auf. Die Kontaktflächen 27 sind insbesondere als Konturfläche 25 ausgebildet, die zumindest bereichsweise mit der Kontur der Außenmantelfläche 13 bzw. einem Kontaktbereich 24 des wenigstens einen klemmend und/oder kraftschlüssig und/oder formschlüssig zu erfassenden Stückgutes 2, 2* korrespondiert. Beispielsweise weist die Konturfläche konkav geformte Aufnahmeelemente 29 auf, deren Rundung korrespondierend zu der Rundung von Flaschen 8 des Kontaktbereiches 24 eines zu manipulierenden Gebindes ausgebildet ist. Das mindestens eine erfasste Stückgut 2, 2* wird insbesondere durch den Formschluss der Konturfläche 25 mit der Kontur der Außenmantelfläche 13 zwischen den beiden Klemmbacken 22 des Greiferkopfes 21 gehalten. Der Formschluss wird in der Regel durch einen Kraftschluss unterstützt, der durch die Zustellbewegung der Klemmbacken 22 zueinander auf das mindestens eine erfasste Stückgut 2, 2* aufgebracht wird.

Die Konturfläche 25 kann beispielsweise durch entsprechend geformte Gummitüllen oder Schaumstoffbeläge gebildet werden. Durch das formschlüssige Greifen der Stückgüter 2, 2* ist eine Erhöhung der Manipulationsgeschwindigkeit möglich, so dass die vom Greiferkopf 21 erfassten Stückgüter 2, 2* schneller an der gewünschten Zielposition P (vergleiche Figur 9) positioniert werden können.

Insbesondere ist vorgesehen, dass mindestens eines von zwei gegenüberliegend angeordneten Klemm- und/oder Greifelementen, insbesondere Klemmbacken 22, zum kraft- und/oder formschlüssigen Erfassen des mindestens einen Stückgutes 2, 2* wenigstens eine Kontaktfläche 27 für das mindestens eine kraft- und/oder formschlüssig zu erfassende Stückgut 2, 2* ausbildet, welche/welcher bei Erfassung des mindestens einen Stückgutes 2, 2* mit einem Kontaktbereich 24 von dessen zylindrischer Außenmantelfläche 13 flächig und/oder streifenförmig und/oder linienförmig und/oder punktuell in Anlage gebracht werden kann.

Bei dem in Figur 14B dargestellten Greiferkopf 21b weisen die beiden gegenüberliegend angeordneten Klemmbacken 22 auf den zueinander weisenden Innenseiten 23 jeweils Kontaktflächen 27 für die Stückgüter 2, 2* auf, die insbesondere durch jeweils eine elastische Auflage 26 gebildet sind. Die elastische Auflage 26 weist insbesondere eine Dicke d auf, die beim klemmenden und/oder kraftschlüssigen und/oder formschlüssigen Erfassen mindestens eines Stückgutes 2, 2* eine zumindest teilweise Kompression der elastischen Auflage 26 erlaubt. Insbesondere ist die elastische Auflage 26 ein reversibel elastisch verformbares Funktionselement und stellt einen Anlagebereich AB zum klemmenden, form- und/oder kraftschlüssigen Erfassen des mindestens einen Stückgutes 2, 2* bereit. Der Kontakt zum mindestens einen erfassten Stückgut 2, 2* und die reversible elastische Verformung der elastischen Auflage 26 werden zumindest solange beibehalten, bis das mindestens eine erfasste Stückgut 2, 2* in die Zielposition und/oder Zielausrichtung gebracht ist.

Somit ergibt sich beim Zustellen der Klemmbacken 22 zum erfassten Stückgut 2, 2* ein erzwungener Formschluss. Der Formschluss wird in der Regel durch einen Kraftschluss unterstützt, der durch die Zustellbewegung der Klemmbacken 22 zueinander auf das mindestens eine erfasste Stückgut 2, 2* aufgebracht wird. Dieser erzwungene Formschluss wird zumindest für die Zeitspanne beibehalten, die notwendig ist, um das mindestens eine Stückgut 2, 2* in die Zielposition P (vergleiche Figur 9) und/oder Zielausrichtung zu bringen.

Nachdem der Greiferkopf 21b die Stückgüter 2, 2* in die gewünschte Zielposition P (vergleiche Figur 9) bewegt und an dieser freigesetzt hat, nimmt die elastische Auflage 26 wieder ihre Ursprungsform mit durchgehend weitgehend gleichmäßiger Dicke d ein, so dass der Greiferkopf 21b universell zum Greifen unterschiedlich geformter Stückgüter 2, 2* eingesetzt werden kann.

Die elastische Auflage 26 kann beispielsweise durch eine Gummischicht oder eine Schaumstoffschicht o.ä. gebildet werden. Zusätzlich kann durch die Auswahl eines geeigneten Materials für die elastische Auflage 26 ein vorteilhafter Reibschluss zwischen der elastischen Auflage 26 und dem jeweilig erfassten Stückgut 2, 2* erfolgen, der die sichere Klemmung und/oder kraftschlüssige und/oder formschlüssige Erfassung des mindestens einen erfassten Stückguts 2, 2* unterstützt.

Figur 14C zeigt eine Ausführungsform eines Greiferkopfes 21c bei der die Greiferpaddel bzw. Klemmbacken 22 jeweils eine Kombination von Reibschluss- und/oder Formschluss- Elementen aufweisen. Hierbei weisen jeweils beide gegenüberliegend angeordnete Klemmbacken 22 wenigstens zwei Kontaktflächen 27 in Form von Konturflächen 25 (analog zu Figur 14A) für das mindestens eine kraft- und/oder formschlüssig zu erfassende Stückgut 2, 2* auf, die entfernt voneinander an gegenüberliegenden Endbereichen 30 der jeweiligen Klemmbacke 22 angeordnet sind.

Der zwischen den Endbereichen 30 ausgebildete Bereich kann ohne Konturflächen 25 oder mit schwächer ausgebildeten Konturflächen 25 ausgestattet sein, da sich die Stückgüter 2, 2* aufgrund ihrer gegenseitigen Kontaktierung seitlich gegeneinander abstützen und stabilisieren, insbesondere beim gleichzeitigen Erfassen von mehreren Stückgütern 2, 2*. Gemäß dem in Figur 14C dargestellten Ausführungsbeispiel ist die zwischen den Endbereichen 30 angeordnete Kontaktfläche 27 für die Stückgüter 2, 2* als elastische Auflage 26 analog zu Figur 14B ausgebildet, auf deren Beschreibung hiermit verwiesen wird. Vorzugsweise erstreckt sich der Anlagebereich AB des wenigstens einen reversibel elastisch verformbaren Funktionselementes bzw. der elastischen Auflage 26 über einen Anteil von mindestens 50% einer Längserstreckung L der jeweiligen Klemmbacke 22.

Die beschriebenen Klemm- und Greifelemente des Manipulators 5 umfassen bspw. auch Doppelgreifer oder Mehrfachgreifer o. dgl., die mehrere Greifpaare bzw. Paare von Klemmbacken 22 aufweisen, deren Greifpaare bzw. Paare von Klemmbacken 22 jedoch insbesondere paarweise zusammenwirken, um bspw. Stückgütern 2, 2* in mehreren parallelen, insbesondere voneinander beabstandeten Reihen (nicht dargestellt) aufnehmen, erfassen und/oder greifen zu können. Es sei somit festgehalten, dass die Zahl von wenigstens zwei gegenüberliegend angeordneten Klemm- und/oder Greifelementen ein Minimum definiert. Es ist damit nicht ausgeschlossen, dass ggf. mehrere Klemm- und/oder Greifelemente in der definierten Weise ausgestaltet sind; zudem ist nicht ausgeschlossen, dass mehr als zwei Elemente vorhanden sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Bezugszeichenliste

| | |
|---|---|
| 1 | Reihe |
| 2,2* | Stückgut |
| 3 | Transporteinrichtung |
| 4 | Erfassungsbereich |
| 5 | Manipulator |
| 6 | Horizontalfördereinrichtung |
| 8 | Flasche |
| 9 | Schrumpffolie |
| 10 | Handhabungsvorrichtung |
| 13 | Außenmantelfläche |
| 21,21a,21b,21c | Greiferkopf |
| 22 | Klemmbacken |
| 23 | Innenseite |
| 24 | Kontaktbereich |
| 25 | Konturfläche |
| 26 | elastische Auflage |
| 29 | Aufnahmeelement |
| 30 | Endbereich |

| AB | Anlagebereich |
|---|---|
| B | Bewegungsrichtung |
| b1,b2 | Bewegungskomponente |
| d | Dicke |
| F | Formation |
| L,L2,L22,LR | Länge / Längserstreckung |
| P | Zielposition |
| S2*, S5 | Symmetrieebene |
| TR | Transportrichtung |
| v3 | Transportgeschwindigkeit |
| v6 | Geschwindigkeit |

**Patentansprüche**

1. Vorrichtung (10) zum Umgang mit in mindestens einer Reihe (1) hintereinander bewegten Stückgütern (2), umfassend

- mindestens einen Manipulator (5) für Stückgüter (2),
- wenigstens eine Transporteinrichtung (3), über welche unmittelbar aufeinanderfolgende Stückgüter (2) der Reihe (1) ohne Beabstandung als geschlossene Formation (F) in einen Erfassungsbereich (4) des mindestens einen Manipulators (5) transportierbar sind,
- wobei der mindestens eine Manipulator (5) zum klemmenden und / oder kraft- und/oder formschlüssigen Erfassen sowie zum Abtrennen eines Stückgutes (2) oder einer Gruppe umfassend wenigstens zwei Stückgüter (2) aus der mittels der wenigstens einen Transporteinrichtung (3) in seinen Erfassungsbereich (4) transportieren geschlossenen Formation (F) und zum Überführen des einen Stückgutes (2) oder der Gruppe in eine Zielposition (P) und / oder Zielausrichtung ausgebildet ist,
- wobei der mindestens eine Manipulator (5) einen sich an einem Drehgelenk befindlichen Greiferkopf (21) umfasst und zum Drehen von mindestens einem erfassten Stückgutes (2) oder zum Drehen einer Gruppe ausgebildet ist, wobei dem mindestens einen Manipulator (5) wenigstens zwei gegenüberliegend, insbesondere paarweise gegenüberliegend angeordnete Klemmbacken (22) zugeordnet sind, welche zum klemmenden und / oder kraft- und/oder formschlüssigen Erfassen sowie zum Abtrennen und Überführen des jeweiligen einen Stückgutes (2) oder der Gruppe in die Zielposition (P) und / oder Zielausrichtung insbesondere jeweils paarweise zusammenwirken,
- wobei mindestens eines von zwei gegenüberliegend angeordneten Klemmbacken (22) des mindestens einen Manipulators (5) zumindest abschnitts- oder bereichsweise mit einer Außenkontur zumindest an einer Kontaktfläche und / oder an den Kontaktbereichen des wenigstens einen kraft- und / oder formschlüssig zu erfassenden Stückgutes (2) korrespondiert,

**dadurch gekennzeichnet, dass**:

- eine, durch das erfasste Stückgut (2) oder die erfasste Gruppe definierte erste vertikale Symmetrieebene (S2*) beabstandet ist von einer hierzu in etwa parallel ausgerichteten zweiten vertikalen Symmetrieebene (S5), die durch die Klemmbacken (22) des Manipulators (5) definiert ist.

2. Vorrichtung (10) nach Anspruch 1, bei der mindestens eines von zwei gegenüberliegend angeordneten Klemmbacken (22) zum kraft- und / oder formschlüssigen Erfassen des mindestens einen Stückgutes (2) wenigstens eine Kontaktfläche, wenigstens ein Kontaktflächenpaar und / oder wenigstens einen Kontaktbereich (24) für das mindestens eine kraft- und / oder formschlüssig zu erfassende Stückgut (2) ausbildet, welche/welcher bei Erfassung des mindestens einen Stückgutes (2) mit dessen zylindrischer, kegelförmiger und / oder konkav oder mehreckig gewölbter bzw. konturierter Außenmantelfläche (11) flächig und / oder streifenförmig und / oder linienförmig und / oder punktuell in Anlage bringbar ist.

3. Vorrichtung (10) nach Anspruch 1 oder 2, bei der mindestens eines von zwei gegenüberliegend angeordneten Klemmbacken (22) zum kraft- und / oder formschlüssigen Erfassen des mindestens einen Stückgutes (2) wenigstens zwei Kontaktflächen, wenigstens zwei Kontaktflächenpaare und / oder wenigstens zwei Kontaktbereiche (24) für das mindestens eine kraft- und / oder formschlüssig zu erfassende Stückgut (2), insbesondere für zwei oder mehr kraft- und / oder formschlüssig zu erfassende Stückgüter (2) ausbildet, die entfernt voneinander an gegenüberliegenden Endbereichen (30) des jeweiligen mindestens einen der zwei gegenüberliegend angeordneten Klemmbacken (22) angeordnet sind.

4. Vorrichtung (10) nach einem der Ansprüche 1 bis 3, bei welcher der mindestens eine Manipulator (5) als Deltakinematik-Roboter ausgebildet oder Teil eines solchen ist oder einen Teil eines Deltakinematik-Roboters bildet.

5. Vorrichtung (10) nach einem der Ansprüche 2 bis 4, bei der mindestens eines von zwei gegenüberliegend angeordneten Klemmbacken (22) wenigstens ein Funktionselement (26) aufweist, welches reversibel elastisch verformbar ausgebildet ist und einen Anlagebereich (AB) zum klemmenden, form- und / oder kraftschlüssigen Erfassen des mindestens ei-

**6.** Vorrichtung (10) nach Anspruch 5, bei welcher der Anlagebereich (AB) des wenigstens einen Funktionselementes (26) der mindestens einen Klemmbacke (22) sich über einen Anteil von mindestens 30%, insbesondere von mindestens 50% einer Längserstreckung (L) der jeweiligen Klemmbacke (22) erstreckt.

**7.** Vorrichtung (10) nach Anspruch 5 oder 6, bei welcher der Anlagebereich (AB) zwischen den wenigstens zwei Kontaktflächen, zwischen den wenigstens zwei Kontaktflächenpaaren und / oder zwischen den wenigstens zwei Kontaktbereichen (24) für das mindestens eine kraft- und / oder formschlüssig zu erfassende Stückgut, insbesondere für zwei oder mehr kraft- und / oder formschlüssig zu erfassende Stückgüter (2) angeordnet ist, welche wenigstens zwei Kontaktflächen, Kontaktflächenpaare und / oder Kontaktbereiche jeweils entfernt voneinander an gegenüberliegenden Endbereichen (30) des jeweiligen mindestens einen von zwei gegenüberliegend angeordneten Klemmbacken (22) ausgebildet sind.

**8.** Verfahren zum Umgang mit in mindestens einer Reihe (1) hintereinander bewegten Stückgütern (2), bei dem

- in einer Reihe (1) unmittelbar aufeinanderfolgende Stückgüter (2) ohne Beabstandung als geschlossene Formation (F) in einen Erfassungsbereich (4) mindestens eines Manipulators (5) transportiert werden und
- ein transportiertes Stückgut (2) oder eine Gruppe umfassend wenigstens zwei transportierte Stückgüter (2) aus der geschlossenen Formation (F) mittels wenigstens zwei gegenüberliegend angeordneter, insbesondere paarweise gegenüberliegend angeordneter Klemmbacken (22) des Manipulators (5) klemmend und / oder formschlüssig erfasst, von der geschlossenen Formation (F) räumlich abgetrennt und in eine definierte relative Zielposition (P) und / oder Zielausrichtung gegenüber nachfolgenden Stückgütern (2) der geschlossenen Formation (F) gebracht wird,
- wobei der mindestens eine Manipulator (5) einen sich an einem Drehgelenk befindlichen Greiferkopf (7) umfasst und in mindestens einem Verfahrensschritt das mindestens eine erfasste Stückgut (2) oder die Gruppe durch Drehen in die definierte relative Zielposition (P) und Zielausrichtung gebracht wird,
- wobei mindestens eines von zwei gegenüberliegend angeordneten Klemmbacken (22) des mindestens einen Manipulators (5) zumindest abschnitts- oder bereichsweise mit einer Außenkontur zumindest an einer Kontaktfläche und / oder an den Kontaktbereichen (24) des wenigstens einen kraft- und / oder formschlüssig zu erfassenden Stückgutes (2) korrespondiert,

**dadurch gekennzeichnet, dass**:

- eine, durch das eine erfasste Stückgut (2) oder durch die erfasste Gruppe definierte erste vertikale Symmetrieebene (S2*) beabstandet ist von einer hierzu in etwa parallel ausgerichteten zweiten vertikalen Symmetrieebene (S5), die durch die Klemmbacken (22) des Manipulators (5) definiert ist.

**9.** Verfahren nach Anspruch 8, bei dem das mindestens eine transportierte Stückgut (2) durch eine Zustellbewegung der wenigstens zwei gegenüberliegend und / oder paarweise gegenüberliegend angeordneten Klemmbacken (22) des Manipulators (5) klemmend, kraft- und / oder formschlüssig erfasst wird, durch eine gemeinsame Bewegung der wenigstens zwei Klemmbacken (22) von der geschlossenen Formation (F) räumlich abgetrennt wird und über die wenigstens zwei Klemmbacken (22) in die definierte relative Zielposition (P) und / oder Zielausrichtung gegenüber nachfolgenden Stückgütern (2) gebracht wird.

**10.** Verfahren nach Anspruch 9, bei dem bei Erfassung zwischen dem mindestens einen Stückgut (2) und mindestens einem der wenigstens zwei gegenüberliegend angeordneten Klemmbacken (22) eine kraft- und / oder formschlüssige Verbindung ausgebildet und zumindest solange aufrechterhalten wird, bis das mindestens eine Stückgut (2) in die Zielposition (P) und / oder Zielausrichtung gebracht ist.

**11.** Verfahren nach Anspruch 9 oder 10, bei dem zum Ausbilden der kraft- und / oder formschlüssigen Verbindung wenigstens eine Kontaktfläche, wenigstens ein Kontaktflächenpaar und / oder wenigstens ein Kontaktbereich (24) des mindestens einen von zwei gegenüberliegend angeordneten Klemmbacken (22) mit einer korrespondierenden zylindrischen, kegelförmigen und / oder konkav oder mehreckig gewölbten bzw. konturierten Außenmantelfläche des mindestens einen Stückgutes (2) flächig und / oder streifenförmig und / oder linienförmig und / oder punktuell in Anlage gebracht wird.

**12.** Verfahren nach einem der Ansprüche 9 bis 11, bei dem zum Ausbilden der kraft- und / oder formschlüssigen Verbindung wenigstens eine Kontaktfläche, wenigstens ein Kontaktflächenpaar und / oder wenigstens ein Kontaktbereich (24) eines ersten Klemmbacken (22) sowie eine weitere Kontaktfläche, ein weiteres Kontaktflächenpaar und / oder ein weiterer Kontaktbereich (24) eines dem ersten Klemmbacken (22) gegenüberliegenden zweiten Klemmbacken (22) jeweils mit einer korrespondierenden zylindrischen, kegelförmigen und / oder konkav oder mehreckig gewölbten bzw. konturierten Außenmantelfläche (11) des mindestens einen Stückgutes (2) flächig und / oder streifenförmig und / oder linienförmig und / oder punktuell in Anlage gebracht werden.

13. Verfahren nach einem der Ansprüche 9 bis 12, bei dem das mindestens eine Stückgut (2) über die zwei sich gegenüberliegenden Klemmbacken (22) klemmend erfasst wird, wobei das mindestens eine Stückgut (2) mit einem Anlagebereich (AB) wenigstens eines Funktionselementes (26) der zwei sich gegenüberliegenden Klemmbacken (22) in Kontakt tritt, welches wenigstens eine Funktionselement (26) aus der klemmenden Erfassung resultierend reversibel elastisch verformt wird, welcher Kontakt und welche reversible elastische Verformung beibehalten werden, bis das mindestens eine Stückgut (2) in die Zielposition (P) und / oder Zielausrichtung gebracht ist.

14. Verfahren nach Anspruch 13, bei welchem

- bei Erfassung zwischen dem mindestens einen Stückgut (2) und mindestens einem von zwei gegenüberliegend angeordneten Klemmbacken (22) eine formschlüssige Verbindung ausgebildet wird, welche formschlüssige Verbindung beibehalten wird, bis das mindestens eine Stückgut (2) in die Zielposition (P) und / oder Zielausrichtung gebracht ist, und bei welchem
- das mindestens eine Stückgut (2) über die zwei sich gegenüberliegenden Klemmbacken (22) klemmend erfasst wird, wobei das mindestens eine Stückgut (2) mit einem Anlagebereich (AB) wenigstens eines Funktionselementes (26) der zwei sich gegenüberliegenden Klemmbacken (22) in Kontakt tritt, welches wenigstens eine Funktionselement (26) aus der klemmenden Erfassung resultierend reversibel elastisch verformt wird, welcher Kontakt und welche reversible elastische Verformung beibehalten werden, bis das mindestens eine Stückgut (2) in die Zielposition (P) und / oder Zielausrichtung gebracht ist.

15. Verfahren nach einem der Ansprüche 8 bis 14, bei welchem dem wenigstens einem erfassten Stückgut (2) gegenüber einer Transportgeschwindigkeit (v3) der geschlossenen Formation (F) wenigstens eine weitere Geschwindigkeits- und / oder Richtungskomponente aufgeprägt wird.

**Claims**

1. An apparatus (10) for handling piece goods (2) being moved one after another in at least one row (1), the apparatus (10) comprising

- at least one manipulator (5) for piece goods (2),
- at least one transport device (3) via which immediately consecutive piece goods (2) of the row (1) are transportable without spaces as closed formation (F) into a seizing range (4) of the at least one manipulator (5),
- wherein the at least one manipulator (5) is designed to seize one piece good (2) or a group comprising at least two piece goods (2) in a clamping and/or force-locking and/or form-locking manner, as well as to separate the one piece good (2) or the group comprising at least two piece goods (2) from the closed formation (F) having been transported into the manipulator seizing range (4) by the at least one transport device (3), and to transfer the one piece good (2) or the group into a target position (P) and/or target alignment,
- wherein the at least one manipulator (5) comprises a gripper head (21) mounted on a swivel joint and is designed to rotate at least one seized piece good (2) or to rotate a group, wherein at least two mutually oppositely arranged clamping jaws (22), in particular pairwise mutually oppositely arranged clamping jaws (22), are assigned to the at least one manipulator (5), which clamping jaws (22) interact, in particular interact in each instance pairwise together, to clampingly and/or forcelockingly and/or form-lockingly seize, as well as to separate, and transfer the particular one piece good (2) or the group into the target position (P) and/or target alignment,
- wherein at least one of two mutually oppositely arranged clamping jaws (22) of the at least one manipulator (5) at least in some sections or in some areas corresponds with an outer contour, at least at a contact surface and/or at the contact areas (24) of the at least one piece good (2) to be seized in a force-locking and/or form-locking manner,

**characterised in that**:

- a first vertical symmetry plane (S2*) defined by the seized piece good (2) or the seized group is spaced apart from and aligned approximately parallel to a second vertical symmetry plane (S5) defined by the clamping jaws (22) of the manipulator (5).

2. The apparatus (10) according to claim 1, in which, for the purpose of seizing the at least one piece good (2) in a force-locking and/or form-locking manner, at least one of two mutually oppositely arranged clamping jaws (22) forms at least one contact surface, at least one contact surface pair, and/or at least one contact area (24) for the at least one piece good (2) to be seized in a force-locking and/or form-locking manner, which contact surface, contact surface pair, and/or contact area (24) is bringable into abutment in a planar and/or strip-shaped and/or linear and/or point-shaped manner on the cylindrical, conical, and/or concavely or polygonally curved or contoured outer cover surface (11) of the at least one piece good (2) upon the at least one piece good (2) being seized.

3. The apparatus (10) according to claim 1 or 2, in which, for the purpose of seizing the at least one piece good (2) in a force-locking and/or form-locking manner, at least one of two mutually oppositely arranged clamping jaws (22) forms at least two contact surfaces, at least two contact surface pairs, and/or at least two contact areas (24) for the at least one piece good (2) to be seized in a force-locking and/or form-locking manner, in particular, for two or more piece goods (2) to be seized in a force-locking and/or form-locking manner, which piece goods (2) are arranged distant from one another at oppositely located end sections (30) of the particular at least one of the two mutually oppositely arranged clamping jaws (22).

4. The apparatus (10) according to one of the claims 1 to 3, in which the at least one manipulator (5) is designed as delta kinematic robot or as a part thereof or forms a part of a delta kinematic robot.

5. The apparatus (10) according to one of the claims 2 to 4, in which at least one of two mutually oppositely arranged clamping jaws (22) has at least one functional element (26), which is designed to be reversibly elastically deformable and which provides an abutment area (AB) for seizing the at least one piece good (2) in a clamping, form-locking, and/or force-locking manner.

6. The apparatus (10) according to claim 5, in which the abutment area (AB) of the at least one functional element (26) of the at least one clamping jaw (22) extends along a portion of at least 30%, in particular of at least 50%, of a longitudinal extension (L) of the particular clamping jaw (22).

7. The apparatus (10) according to claim 5 or 6, in which the abutment area (AB) is arranged between the at least two contact surfaces, between the at least two contact surface pairs, and/or between the at least two contact areas (24) for the at least one piece good (2) to be seized in a force-locking and/or form-locking manner, in particular, for two or more piece goods (2) to be seized in a force-locking and/or form-locking manner, which at least two contact surfaces, contact surface pairs, and/or contact areas are in each instance designed to be distant from one another at oppositely located end sections (30) of the particular at least one of the two mutually oppositely arranged clamping jaws (22).

8. A method for handling piece goods (2) being moved one after another in at least one row (1), in which method

- immediately consecutive piece goods (2) in a row (1) are transported without spaces as closed formation (F) into a seizing range (4) of at least one manipulator (5), and
- a transported piece good (2) or a group comprising at least two transported piece goods (2) is seized in a clamping and/or form-locking manner from the closed formation (F) by at least two mutually oppositely arranged clamping jaws (22), in particular pairwise mutually oppositely arranged clamping jaws (22), of the manipulator (5), is spatially separated from the closed formation (F), and is brought into a defined relative target position (P) and/or target alignment in relation to subsequent piece goods (2) of the closed formation (F),
- wherein the at least one manipulator (5) comprises a gripper head (21) mounted on a swivel joint, and the at least one seized piece good (2) or the group is brought into the defined relative target position (P) and target alignment by being rotated in at least one method step;
- wherein at least one of two mutually oppositely arranged clamping jaws (22) of the at least one manipulator (5) at least in some sections or in some areas corresponds with an outer contour, at least at a contact surface and/or at the contact areas (24) of the at least one piece good (2) to be seized in a force-locking and/or form-locking manner,

**characterised in that**:

- a first vertical symmetry plane (S2*) defined by the seized piece good (2) or by the seized group is spaced apart from and aligned approximately parallel to a second vertical symmetry plane (S5) defined by the clamping jaws (22) of the manipulator.

9. The method according to claim 8, in which the at least one transported piece good (2) is seized in a clamping, force-locking, and/or form-locking manner by an advance movement of the at least two mutually oppositely arranged and/or pairwise mutually oppositely arranged clamping jaws (22) of the manipulator (5), is spatially separated from the closed formation (F) by a common movement of the at least two clamping jaws (22), and is brought into the defined relative target position (P) and/or target alignment in relation to subsequent piece goods (2) by way of the at least two clamping jaws (22).

10. The method according to claim 9, in which a force-locking and/or form-locking connection between the at least one piece good (2) and at least one of the at least two mutually oppositely arranged clamping jaws (22) is formed upon the piece good (2) being seized, and is maintained for at least as long until the at least one piece good (2) has been brought into the target position (P) and/or target alignment.

11. The method according to claim 9 or 10, in which, for the purpose of forming the force-locking and/or form-locking connection, at least one contact surface, at least one contact surface pair, and/or at least one contact area (24) of the at least one of two mutually oppositely arranged clamping jaws (22) is brought into abutment in a planar and/or strip-shaped and/or linear and/or point-shaped manner on the corresponding cylindrical, conical, and/or concavely or polygonally curved or contoured outer cover surface of the at least one piece good (2).

12. The method according to one of the claims 9 to 11, in which, for the purpose of forming the force-locking and/or form-locking connection, at least one contact surface, at least one contact surface pair, and/or at least one contact area (24) of a first clamping jaw (22) as well as a further contact surface, a further contact surface pair, and/or a further contact area (24) of a second clamping jaw (22) located opposite the first clamping jaw (22) is in each instance brought into abutment in a planar and/or strip-shaped and/or linear and/or point-shaped manner on the corresponding cylindrical, conical, and/or concavely or polygonally curved or contoured outer cover surface (11) of the at least one piece good (2).

13. The method according to one of the claims 9 to 12, in which the at least one piece good (2) is seized in a clamping manner by way of the two mutually oppositely located clamping jaws (22), wherein the at least one piece good (2) comes into contact with an abutment area (AB) of at least one functional element (26) of the two mutually oppositely located clamping jaws (22), which at least one functional element (26) is reversibly elastically deformed as a result of the piece good (2) being seized in a clamping manner, which contact and which reversible elastic deformation are maintained until the at least one piece good (2) has been brought into the target position (P) and/or target alignment.

14. The method according to claim 13, in which

- a form-locking connection is formed between the at least one piece good (2) and at least one of two mutually oppositely arranged clamping jaws (22) upon the piece good (2) being seized, which form-locking connection is maintained until the at least one piece good (2) has been brought into the target position (P) and/or target alignment, and in which method
- the at least one piece good (2) is seized in a clamping manner by way of the two mutually oppositely located clamping jaws (22), wherein the at least one piece good (2) comes into contact with an abutment area (AB) of at least one functional element (26) of the two mutually oppositely located clamping jaws (22), which at least one functional element (26) is reversibly elastically deformed as a result of the piece good (2) being seized in a clamping manner, which contact and which reversible elastic deformation are maintained until the at least one piece good (2) has been brought into the target position (P) and/or target alignment.

15. The method of one of the claims 8 to 14, in which at least one further velocity component and/or direction component in relation to a transport speed (v3) of the closed formation (F) is imparted to the at least one seized piece good (2).

**Revendications**

1. Dispositif (10) de manipulation de produits de détail (2) déplacés les uns derrière les autres en au moins une rangée (1), comprenant

- au moins un manipulateur (5) pour les produits de détail (2),
- au moins un dispositif de transport (3) par l'intermédiaire duquel des produits de détail (2) immédiatement successifs de la rangée (1) peuvent être transportés sans espacement, en tant que formation fermée (F), dans une zone de saisie (4) dudit au moins un manipulateur (5),
- dans lequel ledit au moins un manipulateur (5) est conçu pour saisir par serrage et/ou par adhérence et/ou à engagement positif ainsi que pour séparer un produit de détail (2) ou un groupe comprenant au moins deux produits de détail (2) de ladite formation fermée (F) transportée au moyen dudit au moins un dispositif de transport (3) dans sa zone de saisie (4) et pour transférer ledit un produit de détail (2) ou ledit groupe dans une position cible (P) et/ou une orientation cible,
- dans lequel ledit au moins un manipulateur (5) comprend une tête de préhension (21) se trouvant sur un joint rotatif et est conçu pour faire tourner au moins un produit de détail (2) saisi ou pour faire tourner un groupe, dans lequel audit au moins un manipulateur (5) sont associées au moins deux mâchoires de serrage (22) disposées en face l'une de l'autre, en particulier disposées par paires l'une en face de l'autre, qui agissent de concert l'une avec l'autre, en particulier respectivement par paires, pour saisir par serrage et/ou par adhérence et/ou à engagement positif ainsi que pour séparer et transférer ledit un produit de détail (2) respectif ou ledit groupe dans la position cible (P) et/ou l'orientation cible,

- dans lequel au moins l'une de deux mâchoires de serrage (22) disposées en face l'une de l'autre dudit au moins un manipulateur (5) correspond, au moins par sections ou par zones, à un contour extérieur au moins sur une surface de contact et/ou sur les zones de contact (24) dudit au moins un produit de détail (2) à saisir par adhérence et/ou à engagement positif,

**caractérisé par le fait que**:

- un premier plan de symétrie vertical (S2*) qui est défini par le produit de détail (2) saisi ou le groupe saisi est espacé d'un deuxième plan de symétrie vertical (S5) qui est orienté à peu près parallèlement à celui-ci et qui est défini par les mâchoires de serrage (22) du manipulateur (5).

**2.** Dispositif (10) selon la revendication 1, dans lequel, pour saisir par adhérence et/ou à engagement positif ledit au moins un produit de détail (2), au moins l'une de deux mâchoires de serrage (22) disposées en face l'une de l'autre forme au moins une surface de contact, au moins une paire de surfaces de contact et/ou au moins une zone de contact (24) pour ledit au moins un produit de détail (2) à saisir par adhérence et/ou à engagement positif, laquelle, lorsque ledit au moins un produit de détail (2) est saisi, peut être mise en appui de manière plane et/ou en forme de bande et/ou en forme de ligne et/ou de manière ponctuelle sur sa surface latérale extérieure (11) cylindrique, conique et/ou bombée façon concave ou polygonale ou bien contourée.

**3.** Dispositif (10) selon la revendication 1 ou 2, dans lequel, pour saisir par adhérence et/ou à engagement positif ledit au moins un produit de détail (2), au moins l'une de deux mâchoires de serrage (22) disposées en face l'une de l'autre forme au moins deux surfaces de contact, au moins deux paires de surfaces de contact et/ou au moins deux zones de contact (24) pour ledit au moins un produit de détail (2) à saisir par adhérence et/ou à engagement positif, en particulier pour deux ou plusieurs produits de détail (2) à saisir par adhérence et/ou à engagement positif, lesquelles sont disposées à distance les unes des autres sur des zones d'extrémité (30) opposées de ladite au moins une mâchoire de serrage respective des deux mâchoires de serrage (22) disposées en face l'une de l'autre.

**4.** Dispositif (10) selon l'une quelconque des revendications 1 à 3, dans lequel ledit au moins un manipulateur (5) est conçu en tant que robot delta cinématique ou fait partie d'un tel robot delta cinématique ou constitue une partie d'un robot delta cinématique.

**5.** Dispositif (10) selon l'une quelconque des revendications 2 à 4, dans lequel au moins l'une de deux mâchoires de serrage (22) disposées en face l'une de l'autre comprend au moins un élément fonctionnel (26) qui est réalisé de manière à être élastiquement déformable de façon réversible et qui fournit une zone d'appui (AB) pour saisir par serrage, à engagement positif et/ou par adhérence ledit au moins un produit de détail (2).

**6.** Dispositif (10) selon la revendication 5, dans lequel la zone d'appui (AB) dudit au moins un élément fonctionnel (26) de ladite au moins une mâchoire de serrage (22) s'étend sur une proportion d'au moins 30 %, en particulier d'au moins 50 %, d'une extension longitudinale (L) de la mâchoire de serrage (22) respective.

**7.** Dispositif (10) selon la revendication 5 ou 6, dans lequel la zone d'appui (AB) est disposée entre lesdites au moins deux surfaces de contact, entre lesdites au moins deux paires de surfaces de contact et/ou entre lesdites au moins deux zones de contact (24) pour ledit au moins un produit de détail à saisir par adhérence et/ou à engagement positif, en particulier pour deux ou plusieurs produits de détail (2) à saisir par adhérence et/ou à engagement positif, lesquelles au moins deux surfaces de contact, paires de surfaces de contact et/ou zones de contact sont réalisées respectivement à distance l'une de l'autre sur des zones d'extrémité (30) opposées de ladite au moins une mâchoire de serrage respective de deux mâchoires de serrage (22) disposées en face l'une de l'autre.

**8.** Procédé de manipulation de produits de détail (2) déplacés les uns derrière les autres en au moins une rangée (1), dans lequel

- des produits de détail (2) immédiatement successifs en une rangée (1) sont transportés sans espacement, en tant que formation fermée (F), dans une zone de saisie (4) dudit au moins un manipulateur (5), et

- un produit de détail (2) transporté ou un groupe comprenant au moins deux produits de détail (2) transportés de la formation fermée (F) est saisi par serrage et/ou à engagement positif par l'intermédiaire d'au moins deux mâchoires de serrage (22) dudit manipulateur (5) qui sont disposées en face l'une de l'autre, en particulier disposées par paires l'une en face de l'autre, est séparé spatialement de la formation fermée (F) et est amené dans une position cible (P) et/ou orientation cible relative(s) définie(s) par rapport à des produits de détail (2) suivants de la formation fermée (F),

- dans lequel ledit au moins un manipulateur (5) comprend une tête de préhension (7) située sur un joint rotatif, et dans au moins une étape de procédé, ledit au moins un produit de détail (2) saisi ou ledit groupe est amené par rotation dans la position cible (P) et orientation cible relatives définies,

- dans lequel au moins l'une de deux mâchoires de serrage (22) disposées en face l'une de l'autre dudit au moins un manipulateur (5) correspond, au moins par sections ou par zones, à un contour extérieur au moins sur une surface de contact et/ou sur les zones de contact (24) dudit au moins un produit de détail (2) à saisir par adhérence et/ou à engagement positif,

**caractérisé par le fait que** :

- un premier plan de symétrie vertical (S2*) qui est défini par le produit de détail (2) saisi ou par le groupe saisi est espacé d'un deuxième plan de symétrie vertical (S5) qui est orienté à peu près parallèlement à celui-ci et qui est défini par les mâchoires de serrage (22) du manipulateur (5).

9. Procédé selon la revendication 8, dans lequel ledit au moins un produit de détail (2) transporté est saisi par serrage, par adhérence et/ou à engagement positif par un mouvement d'avance desdites au moins deux mâchoires de serrage (22) disposées en face l'une de l'autre et/ou disposées par paires en face l'une de l'autre du manipulateur (5), est séparé spatialement de la formation fermée (F) par un mouvement commun desdites au moins deux mâchoires de serrage (22) et est amené par l'intermédiaire desdites au moins deux mâchoires de serrage (22) dans la position cible (P) et/ou l'orientation cible relative(s) définie(s) par rapport à des produits de détail (2) suivants.

10. Procédé selon la revendication 9, dans lequel, lors de la saisie, une liaison par adhérence et/ou à engagement positif est réalisée entre ledit au moins un produit de détail (2) et au moins l'une desdites au moins deux mâchoires de serrage (22) disposées en face l'une de l'autre et est maintenue au moins jusqu'à ce que ledit au moins un produit de détail (2) soit amené dans la position cible (P) et/ou l'orientation cible.

11. Procédé selon la revendication 9 ou 10, dans lequel, pour réaliser la liaison par adhérence et/ou à engagement positif, au moins une surface de contact, au moins une paire de surfaces de contact et/ou au moins une zone de contact (24) de ladite au moins une mâchoire de serrage de deux mâchoires de serrage (22) disposées en face l'une de l'autre est mise en appui de manière plane et/ou en forme de bande et/ou en forme de ligne et/ou de manière ponctuelle sur la surface latérale extérieure correspondante cylindrique, conique et/ou bombée façon concave ou polygonale ou bien contourée dudit au moins un produit de détail (2).

12. Procédé selon l'une quelconque des revendications 9 à 11, dans lequel, pour réaliser la liaison par adhérence et/ou à engagement positif, au moins une surface de contact, au moins une paire de surfaces de contact et/ou au moins une zone de contact (24) d'une première mâchoire de serrage (22) ainsi qu'une autre surface de contact, une autre paire de surfaces de contact et/ou une autre zone de contact (24) d'une deuxième mâchoire de serrage (22) située en face de la première mâchoire de serrage (22) est chacune mise en appui de manière plane et/ou en forme de bande et/ou en forme de ligne et/ou de manière ponctuelle sur une surface latérale extérieure (11) correspondante cylindrique, conique et/ou bombée façon concave ou polygonale ou bien contourée dudit au moins un produit de détail (2).

13. Procédé selon l'une quelconque des revendications 9 à 12, dans lequel ledit au moins un produit de détail (2) est saisi par serrage par l'intermédiaire des deux mâchoires de serrage (22) situées en face l'une de l'autre, ledit au moins un produit de détail (2) entrant en contact avec une zone d'appui (AB) d'au moins un élément fonctionnel (26) des deux mâchoires de serrage (22) situées en face l'une de l'autre, lequel au moins un élément fonctionnel (26) est déformé élastiquement de manière réversible sous l'effet de la saisie par serrage, lequel contact et laquelle déformation élastique réversible sont maintenus jusqu'à ce que ledit au moins un produit de détail (2) soit amené dans la position cible (P) et/ou l'orientation cible.

14. Procédé selon la revendication 13, dans lequel,

- lors de la saisie, une liaison à engagement positif est réalisée entre ledit au moins un produit de détail (2) et au moins l'une de deux mâchoires de serrage (22) disposées en face l'une de l'autre, laquelle liaison à engagement positif est maintenue jusqu'à ce que ledit au moins un produit de détail (2) soit amené dans la position cible (P) et/ou l'orientation cible, et dans lequel - ledit au moins un produit de détail (2) est saisi par serrage par l'intermédiaire des deux mâchoires de serrage (22) situées en face l'une de l'autre, ledit au moins un produit de détail (2) entrant en contact avec une zone d'appui (AB) d'au moins un élément fonctionnel (26) des deux mâchoires de serrage (22) situées en face l'une de l'autre, lequel au moins un élément fonctionnel (26) est déformé élastiquement de manière réversible sous l'effet de la saisie par serrage, lequel contact et laquelle déformation élastique réversible sont maintenus jusqu'à ce que ledit au moins un produit de détail (2) soit amené dans la position cible (P) et/ou l'orientation cible.

15. Procédé selon l'une quelconque des revendications 8 à 14, dans lequel au moins une autre composante de vitesse et/ou de direction est imposée audit au moins un produit de détail (2) saisi, par rapport à une vitesse de transport (v3) de la formation fermée (F).

Fig. 1

Fig. 2

Fig. 3

Fig. 4

Fig. 5

Fig. 6

Fig. 7

Fig. 8

EP 3 445 684 B1

Fig. 9

Fig. 10

Fig. 11

Fig. 12

EP 3 445 684 B1

Fig. 13

(A) ein 2*  S5  22  S2*  5,21

(B) zwei 2*  S5  S2*  5,21

(C) S5=S2*  drei 2*  L  5,21

(D) ein 2*  L22  22  5  LR  L2

(E) zwei 2*  L22  5  LR  L2  L2

(F) drei 2*  L22  5  L2  L2  L2

Fig. 14

**EP 3 445 684 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1456101 A2
- US 5123231 A
- EP 1927559 A1
- US 20050246056 A1
- EP 2107018 A1
- DE 102011080812 A1
- DE 102009026220 A1
- DE 102009043970 A1
- DE 102010020847 A1
- DE 4439728 A1
- EP 2792626 A1
- EP 0708028 A1
- FR 2993870 A1
- WO 2014145412 A2
- DE 20108401 U1